# EUROPEAN PATENT SPECIFICATION

(11) **EP 3 366 730 B1**
(45) Date of publication and mention of the grant of the patent: **21.07.2021**
(21) Application number: 16837082.3
(22) Date of filing: 12.08.2016
(51) Int. Cl.: C09D 11/326, C09D 11/322, C09D 11/38, B41J 2/01, B41M 5/00

(54) **AQUEOUS INK COMPOSITION**
WÄSSRIGE TINTENZUSAMMENSETZUNG
COMPOSITION D'ENCRE AQUEUSE

(30) Priority: 17.08.2015 JP 2015160612
(43) Date of publication of application: 29.08.2018
(73) Proprietor: TOYO INK SC HOLDINGS CO., LTD., Chuo-ku Tokyo 104-8377 (JP); Toyocolor Co., Ltd., Chuo-ku Tokyo 104-8381 (JP)
(72) Inventor: YODA, Atsushi, Tokyo 104-8378 (JP); SUGIHARA, Masahiro, Tokyo 104-8378 (JP); UTSUGI, Masayoshi, Tokyo 104-8378 (JP)
(74) Representative: Grünecker Patent- und Rechtsanwälte PartG mbB
(86) International application number: PCT/JP2016/073762
(87) International publication number: WO 2017/030092

(56) References cited:
- WO-A1-2017/122818
- WO-A1-2017/159685
- JP-A- 2012 057 043
- JP-A- 2013 216 862
- JP-A- 2013 216 864
- JP-A- 2014 205 769
- US-A1- 2009 263 632
- US-A1- 2014 313 258
- US-A1- 2015 064 425
- US-A1- 2015 103 116

## Description

### TECHNICAL FIELD

The present invention relates to an aqueous ink composition which has excellent dispersion stability, storage stability and drying properties, and is capable of forming a printed item having excellent color development and image quality.

### BACKGROUND ART

The inkjet recording method is a recording method in which ink liquid droplets are discharged from extremely fine nozzles directly onto a recording member, with the ink being adhered to the recording member to form text or an image. This recording method has the advantages that the apparatus used generates little noise and is easy to operate. Further, this recording method also offers the advantages that creating colors is easy, and plain paper can be used as the recording member. Accordingly, inkjet recording output devices are widely used in office and household applications.

On the other hand, even in industrial applications, improvements in printing technology provided by inkjet recording methods mean the use of inkjet recording output devices for digital printing is now expected. For example, printing devices that are capable of printing solvent inks and UV inks to low-absorption substrates (including plastic substrates such as polyvinyl chloride and PET) are actually commercially available. However, in recent years, consideration of the harm that such inks can have on people and the environment, and countermeasures designed to address this harm, mean that restrictions on the use of the solvents and monomers used in these inks continue to be introduced. As a result, replacement of the above types of inks with aqueous inks is desirable, and the demand for aqueous inks is growing.

Aqueous inks can be broadly classified into pigment dispersion inks and dye inks. In recent years, demand has been growing for pigment dispersion inks, which exhibit excellent color development and light resistance and the like. On the other hand, in the case of pigment aqueous dispersion inks, because the pigment is insoluble in water, in many cases, satisfactory pigment dispersibility cannot be achieved. Accordingly, in order to maintain favorable pigment dispersibility within aqueous inks, pigment dispersing resins have been used to achieve better dispersion stability of the pigment in water (Patent Documents 1, 2 and 3).

Further, in order to prevent drying of the nozzles, aqueous inks used in inkjet recording methods typically also contain a water-soluble solvent having a high boiling point and favorable solubility in water. This type of solvent is regarded as a humectant in the aqueous ink.

In general, the drying mechanism following impact of an aqueous ink on a substrate is divided into penetration into the substrate and evaporation, and it is known that the contribution of penetration is extremely large. Accordingly, performing favorable printing of aqueous inks onto low-absorption substrates having high hydrophobicity and slow penetration such as coated papers, art papers and vinyl chloride sheets is difficult. Specifically, when multi-colored printing is performed, color mixing of the inks makes it difficult to form a clean image. Further, compared with those cases where solvent inks or UV inks are used, the printing speed decreases markedly. If a larger drying device is used to improve the drying capabilities for the purpose of increasing the printing speed, then other problems such as an increase in the size of the printing device and increased costs tend to arise. In this manner, altering an inkjet printer that is used as an industrial output device to specifications that are suitable for aqueous inks is proving extremely difficult.

In order to address these issues, one possible method involves adding a water-soluble solvent that exhibits superior penetration and has a high boiling point to the ink to improve the ink drying properties. However, addition of a penetrating solvent to the ink tends to alter the state of dissolution of the pigment dispersing resin that contributes to stabilization of the pigment dispersed state, and this can sometimes cause a marked deterioration in the pigment dispersibility and the storage stability. As a result, a pigment dispersing resin which enables a solvent having superior penetration and a solvent having a high boiling point to be included in the ink without causing a significant deterioration in the pigment dispersibility is required.

Up until this point, in order to achieve image formation on a variety of substrates, improvements in the quality of aqueous inks have progressed by searching for and developing novel materials (Patent Documents 4 and 5). However, in the case of the aqueous inks disclosed in the above documents, the solvent included in the ink has a high boiling point, exhibits little penetration into the substrate, and is added in an extremely large amount. Accordingly, direct printing with aqueous inks to the types of low-absorption substrates that are mainly used as industrial printing substrates has still not been realized.

On the other hand, examples of combinations of commercially available raw materials designed to enable direct printing to low-absorption substrates also exist (Patent Document 6). However, in the case of the aqueous ink disclosed in this document, because the heat distortion temperature of the binder resin that is used must be reduced, the durability of the produced printed items is low, and it is thought that employing this ink under actual usage conditions would prove problematic.

### PRIOR ART DOCUMENTS

### PATENT DOCUMENTS

Patent Document 1: JP S64-6074 A
Patent Document 2: JP S64-31881 A
Patent Document 3: JP H03-210373 A
Patent Document 4: JP 2003-55590 A
Patent Document 5: JP 2007-91909 A
Patent Document 6: J P 2013-230638 A

### DISCLOSURE OF INVENTION

### PROBLEMS INVENTION AIMS TO SOLVE

In light of the above circumstances, an object of embodiments of the present invention is to provide an aqueous ink composition which has excellent dispersion stability, storage stability and drying properties, and is capable of forming a printed item having excellent color development and image quality.

The disclosure of the present invention is related to the subject matter disclosed in prior Japanese Application 2015-160612 filed on August 17, 2015.

### EFFECTS OF THE INVENTION

Embodiments of the present invention are able to provide an aqueous ink composition having excellent dispersion stability, storage stability and drying properties. Further, the aqueous ink composition is not limited to paper substrates such as special-purpose papers having an absorption layer or copy papers, but can also be used favorably for printing to the types of low-absorption substrates (such as coated papers, art papers and vinyl chloride sheets) typically used in printed items for industrial applications, and can provide printed items having excellent color development and image quality.

### EMBODIMENTS FOR CARRYING OUT THE INVENTION

Embodiments of the present invention are described below in detail. The embodiments described below are merely examples for describing the present invention. The present invention is not limited to the embodiments described below, and also includes modifications that can be performed without departing from the scope of the present invention.

One embodiment of the present invention relates to an aqueous ink composition containing, at least, water, a pigment (but excluding titanium oxides in which the pigment surface has been treated with an organic compound), a pigment dispersing resin, and two or more types of alkyl polyols having boiling points of at least 180°C but not more than 250°C at 1 atmosphere, wherein the total amount of the alkyl polyols, relative to the total weight of the aqueous ink composition, is within a range from at least 10% by weight to not more than 30% by weight, and the pigment dispersing resin has an alkyl group of 10 to 36 carbon atoms.

In this embodiment of the present invention, by using a specific combination of the above alkyl polyols and the above pigment dispersing resin in the aqueous ink composition, a reduction in the viscosity of the aqueous ink composition can be achieved, and the dispersion stability, the storage stability and the drying properties can all be improved. In one embodiment, the pigment dispersing resin is preferably used in the form of a pigment dispersion obtained by performing a dispersion treatment together with the pigment.

Moreover, the above aqueous ink composition is not limited to paper substrates such as special-purpose papers having an absorption layer or copy papers, but can also be used favorably for printing to the types of low-absorption substrates (such as coated papers, art papers and vinyl chloride sheets) typically used for industrial printed items, and is capable of forming printed items having excellent color development and image quality.

Generally, when a penetrating solvent is added to an aqueous ink composition obtained by dispersing a pigment using a pigment dispersing resin, the state of dissolution of the pigment dispersing resin tends to change, causing a marked deterioration in the pigment dispersibility and the storage stability. However, in the aqueous ink composition according to an embodiment of the present invention, by ensuring that the alkyl group that exists in the pigment dispersing resin has 10 to 36 carbon atoms, the compatibility of the pigment dispersing resin with penetrating solvents can be improved. As a result, in addition to a reduction in the viscosity of the aqueous ink composition, improvements in the dispersion stability and the viscosity stability can also be achieved. Moreover, using the specific pigment dispersing resin described above broadens the range of penetrating solvents that can be selected for use in the aqueous ink composition, and the blend amount of the penetrating solvent can also be increased. In other words, the wetting properties and penetration of the composition relative to low-absorption substrates, and the drying properties of the aqueous ink composition itself can be improved. Furthermore, from the viewpoint of obtaining printed items having excellent color development and image quality, it is generally thought that it is preferable for the aqueous ink composition to contain a water-soluble solvent having a high boiling point and good solubility in water. In contrast, the aqueous ink composition of this embodiment of the present invention contains alkyl polyols having boiling points of at least 180°C but not more than 250°C, and by including the pigment dispersing resin described above, the blend amounts of these alkyl polyols can be increased.

A feature of the aqueous ink composition according to an embodiment of the present invention is the use of two or more types of alkyl polyols having boiling points that satisfy the above prescribed range. By using appropriate combinations of alkyl polyols having different values for the boiling point, viscosity, and other properties such as the surface tension, the wetting properties and penetration of the composition relative to substrates and the drying properties can be easily controlled. Furthermore, the inventors of the present invention discovered that by using a combination of two or more types of alkyl polyols, the print stability, which is an essential factor in improving the image quality, can be improved. Although the detailed reasons for this finding are unclear, it is thought that by mixing two or more alkyl polyols having different chemical structures, intermolecular forces arc generated as a result of the formation of non-continuous hydrogen bonding, and as a result, an aqueous ink composition having dynamic viscoelasticity characteristics that are ideal for printing can be obtained.

As described above, in an embodiment of the present invention, by combining a specific pigment dispersing resin with two or more types of alkyl polyols having boiling points of at least 180°C but not more than 250°C at I atmosphere, an aqueous ink composition having various desired characteristics can be realized.

Constituent components of the aqueous ink composition that represents one embodiment of the present invention are described below.

### (Pigment)

The aqueous ink composition that represents an embodiment of the present invention contains a pigment as a colorant. A pigment is preferably used from the viewpoints of offering excellent water resistance, light resistance, weather resistance and gas resistance or the like. Examples of pigments that may be used in the present invention include conventional organic pigments and inorganic pigments. However, the pigment used in the present invention does not contain a titanium oxide in which the pigment surface has been treated with an organic compound. The amount of the pigment, relative to the total weight of the aqueous ink composition, is preferably within a range from at least 0.1% by weight to not more than 20% by weight, and is more preferably at least 1% by weight but not more than 15% by weight. By adjusting the amount of the pigment to at least 0.1% by weight, satisfactory color development can be more easily obtained in a single printing. On the other hand, by ensuring the amount of the pigment is not more than 20% by weight, any increase in the viscosity of the aqueous ink composition can be suppressed, the dischargeability of the composition from the inkjet head can be favorably maintained, and the print stability can be easily maintained over a long period.

Examples of cyan pigments that can be used in the present invention include C.I. Pigment Blue 1, 2, 3, 15:3, 15:4, 15:6, 16 and 22, and C.I. Vat Blue 4 and 6. Among these, C.I. Pigment 15:3 and 15:4 are preferred. These cyan pigments may be used individually, or a combination of two or more pigments may be used.

Examples of magenta pigments that can be used in the present invention include C.I. Pigment Red 5, 7, 12, 22, 23, 31, 48 (Ca), 48 (Mn), 49, 52, 53, 57 (Ca), 57:1, 112 and 122; Quinacridone solid solutions 146, 147, 150, 185, 238, 242, 254, 255, 266 and 269, and C.I. Pigment Violet 19, 23, 29, 30, 37, 40, 43 and 50. Among these, the use of one or more pigments selected from the group consisting of C.I. Pigment Red 122, 150, 185, 266 and 269, and C.I. Pigment Violet 19 is preferred.

Examples of yellow pigments that can be used in the present invention include C.I. Pigment Yellow 10, 11, 12, 13, 14, 17, 20, 24, 74, 83, 86, 93, 94, 95, 109, 110, 117, 120, 125, 128, 137, 138, 139, 147, 148, 150, 151, 154, 155, 166, 168, 180, 185 and 213. Among these, the use of one or more pigments selected from the group consisting of C.I. Pigment Yellow 13, 14, 74, 150 and 185 is preferred.

Examples of black pigments that can be used in the present invention include organic pigments such as aniline black, Lumogen black and azomethine black, and inorganic pigments such as carbon black and iron oxide. Further, a plurality of color pigments such as the aforementioned yellow pigments, magenta pigments and cyan pigments may be mixed together and used as a black pigment.

There are no particular limitations on the inorganic pigments that may be used in the present invention. Examples of inorganic pigments other than the carbon black and iron oxide mentioned above include titanium oxide (but excluding titanium oxides in which the pigment surface has been treated with an organic compound).

Examples of carbon black pigments that can be used in the present invention include carbon blacks produced using the furnace method or the channel method. Among these, carbon blacks having a primary particle size of 11 to 40 mµm (nm), a specific surface area measured by the BET method of 50 to 400 m²/g, a volatile fraction of 0.5 to 10% by weight, and a pH value of 2 to 10 are preferred. Carbon blacks having these types of properties can be obtained as commercial products.

Examples of these commercial products are listed below, and any of these products can be used favorably.

Specific examples include No. 33, 40, 45, 52, 900, 2200B, 2300, MA7, MA8 and MCF88 (all manufactured by Mitsubishi Chemical Corporation), RAVEN 1255 (manufactured by Columbian Chemicals Co., Inc.), REGAL 330R, 400R and 660R, and MOGUL L (all manufactured by Cabot Corporation), and Nipex 1601Q, Nipex 1701Q, Nipex 75, Printex 85, Printex 95, Printex 90, Printex 35 and Printex U (all manufactured by Orion Engineered Carbons LLC).

In this embodiment of the present invention, the pigment is not limited to the pigments described above, and other special colors such as orange pigments and green pigments can also be used. Further, a plurality of pigments may be combined. Moreover, in another embodiment, the aqueous ink composition of this embodiment of the present invention may be combined with a clear ink containing no pigment and used as an ink set.

### (Pigment Dispersing Resin)

In order to enable the pigment described above to be used in the aqueous ink composition, the pigment must be able to be dispersed stably in water, and then held stably within the dispersion. Known methods can be used for dispersing the pigment. Examples include methods in which dispersion is achieved using a dispersing resin, or methods in which dispersion is achieved using a surfactant such as a water-soluble surfactant and/or a water-dispersible surfactant. Other methods include methods in which a hydrophilic functional group is introduced chemically and/or physically at the surface of the pigment particles, enabling the pigment to be dispersed and/or dissolved in water without using a dispersant or a surfactant. In embodiments of the present invention, a specific pigment dispersing resin described below is used as a method of dispersing the pigment using a pigment dispersing resin.

By employing a method for dispersing the pigment using the above pigment dispersing resin, the resin adsorption capabilities relative to the pigment can be easily improved by appropriate selection and investigation of the monomer composition and the molecular weight of the pigment dispersing resin. Further, favorable dispersion stability can be achieved even for very fine pigments. Accordingly, by selecting an appropriate dispersing resin, an aqueous ink composition can be provided that exhibits excellent color development and is capable of achieving an expansion of the color reproduction area.

In this regard, the aqueous ink composition according to an embodiment of the present invention features the use of a pigment dispersing resin having an alkyl group of 10 to 36 carbon atoms. There are no particular limitations on the type of pigment dispersing resin, provided it has an alkyl group of 10 to 36 carbon atoms within the molecule. Specific examples of the pigment dispersing resin include acrylic resins, styrene/acrylic resins, maleic acid resins, styrene/maleic acid resins, urethane resins, and ester resins. Among these, the use of an acrylic resin and/or a styrene/acrylic resin is preferred.

Examples of methods for synthesizing the various resins having an alkyl group include methods that employ a condensation reaction between a functional group such as a carboxylic acid group in the resin skeleton of the base resin, and an alcohol or amine compound having an alkyl group. Other examples of methods for synthesizing various resins having an alkyl group include methods in which a monomer having an alkyl group is used during synthesis of the resin skeleton.

The alkyl group in the pigment dispersing resin may be any group having a number of carbon atoms within the range from 10 to 36, and groups having either linear or branched structures may be used. In one embodiment, the alkyl group is preferably linear. Specific examples of linear alkyl groups of 10 to 36 carbon atoms include a lauryl group (C12), myristyl group (C14), cetyl group (C16), stearyl group (C18), arachyl group (C20), behenyl group (C22), lignoceryl group (C24), cerotoyl group (C26), montanyl group (C28), melissyl group (C30), dotriacontanoyl group (C32), tetratriacontanoyl group (C34), and hexatriacontanoyl group (C36).

In the present invention, by ensuring that the number of carbon atoms in the alkyl group in the pigment dispersing resin is within the range from 10 to 36, a reduction in the viscosity of the aqueous ink composition and better viscosity stability can be achieved. When the number of carbon atoms in the alkyl group is at least 10, any deterioration in the viscosity stability is suppressed, and the aqueous ink composition can be more easily used in a stable manner over a long period. Further, when the number of carbon atoms in the alkyl group is not more than 36, any increase in the viscosity of the aqueous ink composition can be suppressed, and the aqueous ink composition can be used favorably in inkjet applications. The alkyl group in the pigment dispersing resin preferably has 12 to 30 carbon atoms, and more preferably 18 to 24 carbon atoms.

Further, in one embodiment, the pigment dispersing resin preferably also has an aromatic group. By introducing an aromatic group into the pigment dispersing resin, the pigment dispersibility can be enhanced, and the dispersion stability can be further improved. Examples of the aromatic group include a phenyl group, naphthyl group, anthryl group, tolyl group, xylyl group, mesityl group and anisyl group. Among these, in terms of the dispersion stability, a phenyl group and/or a tolyl is preferred.

In one embodiment, in order to improve the degree of solubility in water, acid groups in the pigment dispersing resin are preferably neutralized with a base. Examples of bases that may be used include ammonia water, organic bases such as dimethylaminoethanol, diethanolamine and triethanolamine, and inorganic bases such as lithium hydroxide, sodium hydroxide and potassium hydroxide.

In one embodiment, the acid value of the pigment dispersing resin is preferably from 50 to 400 mgKOH/g. When the acid value is at least 50 mgKOH/g, dissolving the pigment dispersing resin in water is easier, and therefore any increase in the viscosity of the pigment dispersion can be suppressed. Further, when the acid value is not more than 400 mgKOH/g, interactions between molecules of the pigment dispersing resin are weak, making it easier to suppress any increase in viscosity. The acid value of the pigment dispersing resin is more preferably from 100 to 350 mgKOH/g, and even more preferably from 150 to 300 mgKOH/g.

In one embodiment, in terms of the molecular weight of the pigment dispersing resin, the weight average molecular weight is preferably within a range from at least 1,000 to not more than 100,000, and is more preferably within a range from at least 5,000 to not more than 50,000. The weight average molecular weight is even more preferably within a range from at least 17,000 to not more than 80,000, and is particularly preferably within a range from at least 20,000 to not more than 50,000. By adjusting the molecular weight of the pigment dispersing resin to a value within the above range, the pigment can be more easily dispersed stably in water, and the composition can be more easily adjusted to a viscosity that is appropriate for an aqueous ink composition. In particular, by ensuring that the weight average molecular weight is not more than 100,000, any increase in the viscosity during dispersion can be easily suppressed. As a result, any deterioration in the discharge stability from the inkjet head can be suppressed, and superior print stability can be more easily obtained.

In the present description, the weight average molecular weight of the pigment dispersing resin means the polystyrene-equivalent weight average molecular weight, and can be measured using normal methods. For example, the polystyrene-equivalent value measured with a GPC (HLC-8120GPC, manufactured by Tosoh Corporation) fitted with a TSKgel column (manufactured by Tosoh Corporation) and an RI detector, using THF as the eluent, can be used as the weight average molecular weight value.

In one embodiment of the present invention, the weight ratio between the pigment and the pigment dispersing resin in the aqueous ink composition (pigment/pigment dispersing resin) is preferably within a range from 2/1 to 100/1. Ensuring that the ratio of the pigment dispersing resin relative to the pigment satisfies this range makes it easier to obtain the desired improvement effects. Specifically, by ensuring that the ratio of the pigment dispersing resin relative to the pigment is not more than 2/1, any increase in the viscosity of the pigment dispersion can be more easily suppressed. Further, by ensuring that the ratio of the pigment dispersing resin relative to the pigment is at least 100/1, any deterioration in the pigment dispersibility, any increase in viscosity, and any deterioration in the stability of the dispersion and the like can be more easily suppressed. The weight ratio between the pigment and the pigment dispersing resin is more preferably from 20/9 to 50/1, even more preferably from 5/2 to 25/1, and even more preferably from 20/7 to 20/1.

In one embodiment, the pigment and the pigment dispersing resin are preferably used in the form of a pigment dispersion obtained by dispersing the pigment and the pigment dispersing resin. Although there are no particular limitations on the method used for producing the pigment dispersion, one example is the method described below. First, the pigment is added to an aqueous medium prepared by mixing the pigment dispersing resin and water, and mixing and stirring are then performed. Then, by subjecting the thus obtained mixture to a dispersion treatment using a dispersion device, a pigment dispersion can be obtained. Subsequently, if required, a centrifugal separation treatment or filtration treatment may be performed. Any wet dispersion device may be used as the dispersion device, and of the various devices, the use of a beads mill is preferred.

### (Alkyl Polyols)

The aqueous ink composition according to an embodiment of the present invention features the use of two or more types of alkyl polyols having boiling points within a prescribed range. In this description, the term "alkyl polyol" means a compound in which two or more hydrogen atoms within the molecule of an aliphatic or alicyclic alkane compound have been substituted with hydroxyl groups. In this compound, the plurality of hydroxyl groups may be bonded to the same carbon atom. The above alkyl polyols can be used favorably as water-soluble solvents that exhibit superior penetration properties and have high boiling points.

The alkyl polyols used in the present invention have a boiling point at 1 atmosphere that is preferably within a range from at least 180°C to not more than 250°C, and this boiling point is more preferably within a range from at least 180°C to not more than 230°C. By using alkyl polyols having boiling points within this range, the wetting properties and penetration of the aqueous ink composition relative to the substrate, and the drying properties of the aqueous ink composition itself can be easily controlled, regardless of the nature of the recording medium (the substrate). As a result, a favorable moisture level can be maintained on the inkjet head nozzles, and images having excellent fixability can be produced by direct printing to a variety of print media, without requiring any increase in the size of the drying device.

When the boiling points at 1 atmosphere of the above alkyl polyols are at least 180°C, drying of the aqueous ink composition on the inkjet head nozzles is suppressed, and the occurrence of nozzle blockages can be more easily prevented. Further, if the boiling points of the alkyl polyols are too high, then image irregularities may occur, and the image quality can sometimes deteriorate markedly. Accordingly, by using alkyl polyols for which the boiling point at I atmosphere is not more than 250°C, image irregularities and deterioration in the image quality can be suppressed.

The boiling point at 1 atmosphere described in the present description can be measured using a thermal analysis device.

In one embodiment, it is preferable that at least one of the two or more types of alkyl polyols contained in the aqueous ink composition is an aliphatic alkanediol (hereafter also referred to as simply an "alkanediol"). In another embodiment, it is more preferable that all of the two or more types of alkyl polyols are composed solely of alkanediols. In printed items for industrial applications, low-penetration substrates having high hydrophobicity such as coated papers, art papers and polyvinyl chloride sheets are typically used. By using the embodiment described above, the wetting properties of the aqueous ink composition can be enhanced even on this type of low-penetration substrate, making it easier to improve the dot set performance on the substrate, and improve the image quality.

Furthermore, in one embodiment, it is particularly preferable that the above aliphatic alkanediols are aliphatic 1,2-alkanediols (hereafter also referred to as simply "1,2-alkanediols"). Although the reasons are not entirely clear, in a 1,2-alkaendiol, the hydrocarbon group which exhibits hydrophobicity and the hydroxyl groups that exhibit hydrophilicity are separated within the molecule. As a result, it is thought that the 1,2-alkanediols may function like surfactants, causing a reduction in the dynamic/static surface tension of the aqueous ink composition, and thereby producing a marked improvement in the image quality of the printed items. In the 1,2-alkanediols, the hydrocarbon group that constitutes the main chain may be either a linear or branched chain. In terms of facilitating a reduction in the dynamic surface tension of the aqueous ink composition, selection of linear 1,2-alkanediols is preferred.

Specific examples of alkyl polyols having a boiling point at 1 atmosphere of at least 180°C but not more than 250°C include, but are not limited to, the following:
1,2-propanediol (boiling point: 188°C), 1,2-butanediol (boiling point: 194°C), ethylene glycol (boiling point: 196°C), 2-methylpentan-2,4-diol (boiling point: 197°C), dibutylene glycol (boiling point: 202°C), 3-methyl-1,3-butanediol (boiling point: 203°C), 1,3-butanediol (boiling point: 208°C), 1,2-pentandiol (boiling point: 210°C), 1,3-propanediol (boiling point: 210°C), 2,2-dimethyl-1,3-propanediol (boiling point: 210°C), 2-methyl-1,3-propanediol (boiling point: 214°C), 1,2-hexanediol (boiling point: 223°C), 2-ethyl-2-methyl-1,3-propanediol (boiling point: 226°C), 1,2-heptanediol (boiling point: 227°C), 1,4-butanediol (boiling point: 230°C), 2-methyf-2-propyl-1,3-propanediol (boiling point: 230°C), 1,2-cyclohexanediol (boiling point: 240 to 245°C), dipropylene glycol (boiling point: 230°C), 1,5-pentanediol (boiling point: 242°C), 2-ethyl-1,3-hexanediol (boiling point: 244°C), 1,3-cyclohexanediol (boiling point: 245 to 250°C), 3-methyl-1,5-pentanediol (boiling point: 249°C), 1,6-hexanediol (boiling point: 250°C), 1,2-cyclopentanediol (boiling point: 250°C), and 1,4-cyclohexanediol (boiling point: 250°C). Combinations of two or more of these alkanediols may be used. Further, combinations of one of these alkanediols with one or more other alkyl polyols may also be used.

In one embodiment, aliphatic alkanediols are preferably selected from the alkyl polyols mentioned above. Specifically, these aliphatic alkane diols include 1,2-propanediol (boiling point: 188°C), 1,2-butanediol (boiling point: 194°C), 1,3-butanediol (boiling point: 208°C), 1,2-pentandiol (boiling point: 210°C), 1,5-pentanediol (boiling point: 242°C), 1,2-hexanediol (boiling point: 223°C), 1,6-hexanediol (boiling point: 250°C) and 1,2-heptanediol (boiling point: 227°C). These aliphatic alkanediols may be used individually, or a combination of two or more compounds may be used. In one embodiment, a 1,2-alkanediol is preferably selected from among the above aliphatic alkanediols. Examples of 1,2-alkanediols include 1,2-propanediol, 1,2-butanediol, 1,2-pentandiol, 1,2-hexanediol and 1,2-heptanediol.

In the aqueous ink composition that represents one embodiment of the present invention, the total amount of the alkyl polyols, relative to the total weight of the aqueous ink composition, is within a range from at least 10% by weight to not more than 30% by weight. The lower limit for this amount of alkyl polyols, in order of increasing preference, is more preferably at least 11% by weight, at least 13% by weight, at least 16% by weight, or greater than 20% by weight. In one embodiment, the amount of alkyl polyols is preferably at least 13% by weight but not more than 30% by weight, more preferably at least 16% by weight but not more than 30% by weight, and even more preferably at least 21% by weight but not more than 30% by weight.

Ensuring that the total amount of alkyl polyols is at least 10% by weight makes it easier to maintain a favorable moisture level on the inkjet head nozzles. As a result, nozzle blockages can be suppressed, print stability can be improved, and damage to the inkjet head can be prevented. In particular, when the total amount of alkyl polyols is greater than 20% by weight, not only can nozzle blockages be prevented, but wetting of the printing substrate can be improved, enabling a combination of excellent print stability and superior image quality to be achieved. Further, when the total amount of alkyl polyols is not more than 30% by weight, the drying properties of the aqueous ink composition improve, and density unevenness and fine line bleeding within the image are suppressed, thus facilitating an improvement in the image quality.

In one preferred embodiment of the present invention, at least one of the above alkanediols is a 1,2-alkanediol of at least 5 carbon atoms, and the amount of that 1,2-alkanediol, relative to the total weight of the aqueous ink composition, is preferably greater than 10% by weight but not more than 30% by weight. By using this embodiment, printed items of favorable image quality can be obtained with ease. In one embodiment, the above amount is more preferably at least 11% by weight but not more than 29% by weight, and is even more preferably at least 13% by weight but not more than 25% by weight.

Although not a particular restriction, in one preferred embodiment, the above alkanediols preferably include 1,2-hexanediol as the aforementioned 1,2-alkanediol of at least 5 carbon atoms, and the amount of the 1,2-hexanediol, relative to the total weight of the aqueous ink composition, is preferably at least 9% by weight but not more than 29% by weight. In one embodiment, this amount is preferably at least 12% by weight but not more than 25% by weight, more preferably at least 13% by weight but not more than 20% by weight, and even more preferably at least 15% by weight but not more than 20% by weight. By using this embodiment, the wetting properties of the aqueous ink composition relative to various substrates can be improved, and an aqueous ink composition can be obtained that exhibits excellent levels of dot bleeding, excellent drying properties, and superior dispersion stability.

In another preferred embodiment of the present invention, the above alkanediols preferably include at least one of 1,2-pentanediol and 1,2-hexanediol, and the total amount of these two compounds, relative to the total weight of the aqueous ink composition, is preferably not more than 15% by weight. In one embodiment, the above amount, in order of increasing preference, is preferably at least 0.1% by weight, at least 0.5% by weight, at least 0.9% by weight, or at least 1.0% by weight. On the other hand. the amount, in order of increasing preference, is preferably not more than 13% by weight, not more than 10% by weight, or not more than 6% by weight. By using this embodiment, a combination of good nozzle blockage prevention and favorable image quality improvement can be achieved during high-speed printing.

Further, in another preferred embodiment of the present invention, the above alkanediols preferably include at least one of 1,2-pentanediol and 1,2-hexanediol, as well as 1,2-butanediol. The total amount of these alkanediols, relative to the total weight of the aqueous ink composition, is preferably at least 15% by weight but not more than 30% by weight. This total amount is more preferably at least 16% by weight but not more than 26% by weight, and even more preferably at least 20% by weight but not more than 26% by weight. By using this embodiment, the drying properties of the aqueous ink composition can be improved, and printed items of excellent image quality can be obtained even during high-speed printing.

Moreover, in yet another embodiment of the present invention, the above alkanediols preferably include 1,2-butanediol but do not contain 1,2-pentanediol or 1,2-hexanediol, and the amount of the 1,2-butanediol, relative to the total weight of the aqueous ink composition, is preferably at least 10% by weight. This amount, in order of increasing preference, is more preferably at least 15% by weight, at least 18% by weight, or at least 20% by weight, but is less than 30% by weight.

In this type of embodiment, the alkanediols may include 1,2-butanediol together with 1,2-propanediol and/or dipropylene glycol. The alkanediols preferably include 1,2-butanediol and dipropylene glycol. In one embodiment, the total amount of the 1,2-propanediol and/or dipropylene glycol is preferably at least 0.5% by weight but not more than 5% by weight, more preferably at least 0.7% by weight but not more than 4% by weight, and even more preferably at least 1% by weight but not more than 3% by weight. On the other hand, the amount of the 1,2-butanediol is preferably at least 15% by weight but not more than 29% by weight, more preferably at least 18% by weight but not more than 28% by weight, and even more preferably at least 20% by weight but not more than 27% by weight. By using this type of embodiment, favorable results can be more easily obtained for both the decap properties and the drying properties.

In one embodiment, in order to adjust the moisture retention properties and the substrate penetration properties of the aqueous ink composition, the aqueous ink composition may also contain an organic solvent besides the alkanediols described above. Examples of organic solvents that can be used in combination with the alkanediols include glycol monoalkyl ethers such as ethylene glycol monoethyl ether, ethylene glycol monobutyl ether, diethylene glycol monomethyl ether, diethylene glycol monoethyl ether, diethylene glycol monopropyl ether, diethylene glycol monobutyl ether, diethylene glycol monopentyl ether, diethylene glycol monohexyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monobutyl ether, propylene glycol monopropyl ether, propylene glycol monobutyl ether, dipropylene glycol monomethyl ether and tripropylene glycol monomethyl ether, glycol dialkyl ethers such as diethylene glycol dimethyl ether, triethylene glycol dimethyl ether, tetraethylene glycol dimethyl ether, diethylene glycol diethyl ether, triethylene glycol diethyl ether, tetraethylene glycol diethyl ether, diethylene glycol methyl ethyl ether, triethylene glycol methyl ethyl ether, tetraethylene glycol methyl ethyl ether, diethylene glycol butyl methyl ether, triethylene glycol butyl methyl ether and tetraethylene glycol butyl methyl ether, and heterocyclic compounds such as 2-pyrrolidone, N-methylpyrrolidone, N-ethylpyrrolidone, N-methyloxazolidinone, N-ethyloxazolidinone, γ-butyrolactone and ε-caprolactone. These solvents may be used individually, or a mixture of a plurality of solvents may be used.

### (Binder Resin)

The aqueous ink composition of the present invention also contains a binder resin. Known binder resins for aqueous ink compositions include water-soluble resins and resin microparticles (emulsions). Resin microparticles generally have a higher molecular weight than water-soluble resins. Further, resin microparticles can lower the ink viscosity, meaning a larger amount of resin microparticles can be included in the aqueous ink composition. Accordingly, resin microparticles can be used favorably for enhancing the durability of the printed items. Examples of types of resins that can be used as the resin microparticles include acrylic-based, styrene/acrylic-based, urethane-based, styrene/butadiene-based, vinyl chloride-based and polyolefin-based resins. Among these, from the viewpoints of the stability of the aqueous ink composition and the durability of the printed items, acrylic-based and/or styrene/acrylic-based microparticles can be used particularly favorably.

On the other hand, in those cases where the binder resin in the aqueous ink composition is composed of resin microparticles, when the water volatilizes, the resin microparticles that were previously in a dispersed state begin to aggregate and form a film, which can sometimes cause blockages of the inkjet head nozzles and a deterioration in the print stability. Accordingly, by controlling the monomer composition of the resin microparticles, and ensuring that the glass transition temperature (Tg) is at least 80°C, aggregation upon volatilization of the water can be reduced to some extent. However, because the solvent added to the aqueous ink composition lowers the minimum film forming temperature (MFT) of the resin microparticles, the above method does not provide a complete resolution of the above problem.

Against this background, if maintenance of the inkjet printer is also taken into consideration, the binder resin is a water-soluble resin. The weight average molecular weight of the water-soluble resin is preferably within a range from at least 10,000 to not more than 50,000, and is more preferably at least 20,000 but not more than 40,000. A weight average molecular weight of at least 10.000 is preferable in terms of facilitating enhancement of the coating film durability of the printed items. On the other hand, when the weight average molecular weight is not more than 50,000, any deterioration in the discharge stability from the inkjet head can be suppressed, and favorable print stability can be more easily maintained.

Further, when a water-soluble resin is selected as the binder resin, the acid value of the water-soluble resin is important. The acid value of the water-soluble resin is within a range from 10 to 80 mgKOH/g, and preferably from 20 to 50 mgKOH/g. When the acid value is at least 10 mgKOH/g, the aqueous ink composition is able to be redissolved even after it has solidified. As a result, the occurrence of blockages in the inkjet head nozzles can be suppressed, and favorable print stability can be maintained. On the other hand, when the acid value is not more than 80 mgKOH/g, any reduction in the water resistance of the printed item coating film can be more easily suppressed.

In one embodiment, the amount of the binder resin in the aqueous ink composition, calculated as a solid fraction relative to the total weight of the aqueous ink composition, is preferably within a range from at least 2% by weight to not more than 10% by weight. This amount is more preferably at least 3% by weight but not more than 8% by weight, and particularly preferably at least 3% by weight but not more than 6% by weight.

Binder resins that can be used in the present invention can be obtained as commercial products. Examples include products manufactured by BASF Japan Ltd., such as the product "JONCRYL 819" (a styrene/acrylic water-soluble resin, weight average molecular weight: 14,500, acid value: 75 mgKOH/g).

### (Surfactant)

In one embodiment, the aqueous ink composition preferably also contains a surfactant for the purposes of adjusting the surface tension and ensuring favorable wetting properties for the aqueous ink composition on the substrate. Surfactants are known to generally cause a deterioration in the pigment dispersion stability. However, in an embodiment of the present invention, by including a specific pigment dispersing resin in the aqueous ink composition, various surfactants can be selected and used favorably in the composition without affecting the dispersion stability of the pigment.

Examples of surfactants include acetylene-based, silicon-based, acrylic-based and fluorine-based surfactants, which may be selected appropriately in accordance with the application. From the viewpoint of satisfactorily reducing the surface tension of the aqueous ink composition, the use of a silicon-based or fluorine-based surfactant is preferred.

With regards the silicon-based surfactant, surfactants with various structures for imparting functionality are available from all manner of companies. In one embodiment, from the viewpoint of imparting the aqueous ink composition with favorable wetting properties and penetration relative to the printing substrate, the use of compounds represented by general formulas (1) to (3) shown below is preferred. A compound represented by general formula (2) or general formula (3) is more preferred, and a compound represented by general formula (2) is even more desirable. In one embodiment, the amount added of the surfactant, calculated as a solid fraction relative to the total weight of the aqueous ink composition, is preferably at least 0.1% by weight but not more than 5.0% by weight, and more preferably at least 0.5% by weight but not more than 3.0% by weight.

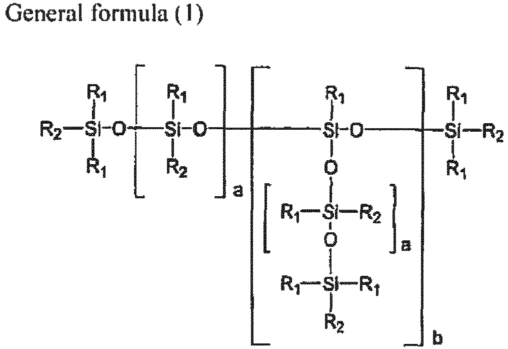

In general formula (1), a represents an integer of 1 to 500, and b represents an integer of 0 to 10.
R₁ represents an alkyl group or an aryl group.
R₂ represents a substituent selected from the group consisting of substituents (A), (B), (C) and (D) shown below. At least one R₂ group includes a substituent (A).

### Substituent (A)

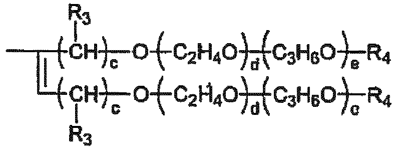

In the above formula, c represents an integer of 1 to 20,
d represents an integer of 0 to 50, and
e represents an integer of 0 to 50.
R₃ represents a hydrogen atom or an alkyl group, and
R₄ represents any one of a hydrogen atom, an alkyl group and an acyl group.

### Substituent (B)

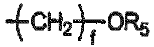

In the above formula, f represents an integer of 2 to 20.

R₅ represents any one of a hydrogen atom, an alkyl group, an acyl group, and an ether group having a dimethylpropyl skeleton.

### Substituent (C)

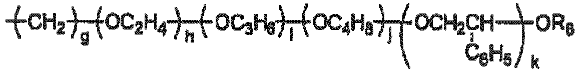

In the above formula, g represents an integer of 2 to 6,
h represents an integer of 0 to 20,
i represents an integer of 1 to 50,
j represents an integer of 0 to 10, and
k represents an integer of 0 to 10.
R₆ represents any one of a hydrogen atom, an alkyl group and an acyl group.

### Substituent (D)

An alkyl group or an aryl group.

Examples of commercially available products that are compounds represented by general formula (1) include Tegotwin 4000 and Tegotwin 4100 and the like, manufactured by Evonik Degussa GmbH.

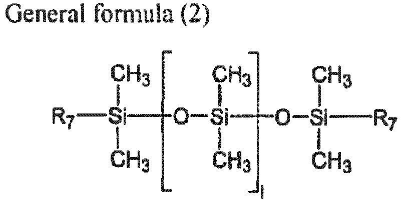

In general formula (2), I represents an integer of 10 to 80.

R₇ represents a substituent (E) shown below.

### Substituent (E)

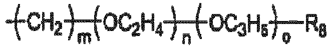

In the above formula, m represents an integer of 1 to 6,
n represents an integer of 0 to 50, and
o represents an integer of 0 to 50,
provided that n+o is an integer of 1 or greater.
R₈ represents a hydrogen atom, an alkyl group of 1 to 6 carbon atoms, or a (meth)acrylic group.

Examples of commercially available products that are compounds represented by general formula (2) include BY 16-201 and SF8427 manufactured by Dow Corning Toray Co., Ltd., and BYK-331, BYK-333 and BYK-UV3500 manufactured by BYK Chemie GmbH. Further examples include Tegoglide 410, Tegoglide 432, Tegoglide 435, Tegoglide 440 and Tegoglide 450 manufactured by Evonik Degussa GmbH.

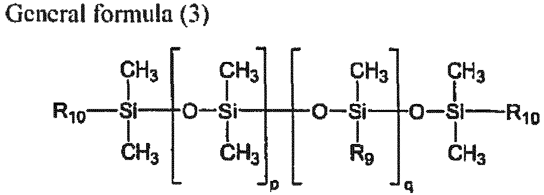

In general formula (3), p and q each represent an integer of 1 or greater,
provided that p+q is an integer of 3 to 50.
R₉ represents a substituent (F) shown below, and
R₁₀ represents an alkyl group of I to 6 carbon atoms.

### Substituent (F)

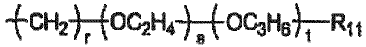

In the above formula, r represents an integer of I to 6,
s represents an integer of 0 to 50, and
t represents an integer of 0 to 50,
provided that s+t is an integer of I or greater.
R₁₁ represents a hydrogen atom, an alkyl group of 1 to 6 carbon atoms, or a (meth)acrylic group.

Examples of commercially available products that are compounds represented by general formula (3) include SF8428, FZ-2162, 8032 Additive, SH3749, FZ-77, L-7001, L-7002, FZ-2104, FZ-2110, F-2123, SH8400 and SH3773M manufactured by Dow Corning Toray Co., Ltd., and BYK-345, BYK-346, BYK-347, BYK-348 and BYK-349 manufactured by BYK Chemie GmbH. Other examples include Tegowet 250, Tegowet 260, Tegowet 270 and Tegowet 280 manufactured by Evonik Degussa GmbH. Further examples include KF-351A, KF-352A. KF-353, KF-354L, KF-355A, KF-615A, KF-640, KF-642 and KF-643 manufactured by Shin-Etsu Chemical Co., Ltd. Another example is SILFACE 503A manufactured by Nissin Chemical Industry Co., Ltd.

During the process in which the aqueous ink composition on the printing substrate evaporates, the molecular weight of the surfactant is also an important factor in controlling the wetting properties of the aqueous ink composition on the printing substrate, and improving the quality of the printed items. In one embodiment, the molecular weight of the surfactant is preferably a weight average molecular weight of at least 1,000 but not more than 7,000, and more preferably at least 1,500 but not more than 5,000. When the weight average molecular weight is at least 1,000, the wetting properties of the composition relative to the printing substrate can be more easily controlled. Further, when the weight average molecular weight is not more than 7,000, wetting of the substrate can be improved, and favorable storage stability for the aqueous ink composition can be more easily obtained.

### (Other Components)

In one embodiment, the water content in the aqueous ink composition, relative to the total weight of the aqueous ink composition, is preferably within a range from 20 to 80% by weight, and more preferably from 25 to 75% by weight.

In one embodiment, the aqueous ink composition may also contain various types of additives such as anti-foaming agents, thickeners and preservatives as required. Adding these types of additives to the aqueous ink composition enables the composition to be used more favorably as an inkjet ink.

### (Printing Method)

Inkjet printing methods are generally broadly classified into scanning methods and one-pass methods. The scanning method is a method in which printing is performed while the inkjet head is scanned a plurality of times across a direction orthogonal to the transport direction of the recording medium (the substrate). In contrast, the one-pass method is a method in which printing is performed either by scanning the inkjet head once across a stopped recording medium (the substrate), or by passing the recording medium once beneath a fixed inkjet head. In those cases where the aqueous ink composition of the present invention is used as an inkjet ink, printing can be performed using either of the above methods. In one embodiment, an aqueous ink composition containing at least one 1,2-alkanediol of at least 5 carbon atoms as an alkanediol, in an amount of at least 10% by weight but not more than 30% by weight relative to the total weight of the aqueous ink composition, can be used favorably for printing by the scanning method. Further, in another embodiment, an aqueous ink composition containing at least one of 1,2-pentanediol and 1,2-hexanediol as an alkanediol, in a total amount of not more than 15% by weight relative to the total weight of the aqueous ink composition, can be used favorably for printing by the one-pass method. In this embodiment, the alkanediol preferably contains at least 1,2-hexanediol. Moreover, in the above embodiment, the alkanediols preferably also include 1,2-butanediol. In these embodiments, the total amount of the 1,2-pentanediol and/or 1,2-hexanediol, and the 1,2-butanediol, is preferably at least 15% by weight but not more than 30% by weight relative to the total weight of the aqueous ink composition.

### (Substrate)

There are no particular limitations on the substrate to which the aqueous ink composition of an embodiment of the present invention is printed. Examples of the substrate include paper substrates such as high-quality paper, coated paper, art paper, cast paper and synthetic paper, plastic substrates such as polycarbonate, hard polyvinyl chloride, soft polyvinyl chloride, polystyrene, styrofoam, PMMA, polypropylene, polyethylene and PET, metal substrates such as stainless steel, and glass and timber. As described above, the aqueous ink composition according to an embodiment of the present invention can be used favorably not only on paper substrates such as special-purpose papers having an absorption layer or copy papers, but also on low-absorption substrates such as coated papers, art papers and vinyl chloride sheets that are typically used in printed items for industrial applications.

### EXAMPLES

The present invention is described below in further detail using a series of examples and comparative examples. In the following description, unless specifically stated otherwise, the terms "parts", "%" and "ratio" refer to weight-based amounts.

### 1. Preparation of Components

### 1A. Preparation of Pigment Dispersing Resins

### (Pigment Dispersing Resin 1)

A reaction container fitted with a gas inlet tube, a thermometer, a condenser and a stirrer was charged with 93.4 parts of butanol, and the interior of the container was flushed with nitrogen gas. The contents of the reaction container were heated to 110°C, and a mixture containing 95 parts of lauryl methacrylate and 5 parts of acrylic acid as polymerizable monomers and 6 parts of an initiator V-601 (manufactured by Wako Pure Chemical Industries, Ltd.) was added dropwise to the container over a period of two hours to achieve a polymerization reaction. Following completion of the dropwise addition, reaction was continued at 110°C for a further three hours, an additional 0.6 parts of V-601 (manufactured by Wako Pure Chemical Industries, Ltd.) was then added, and the reaction was continued at 110°C for a further one hour, thus obtaining a solution of a pigment dispersing resin 1. Following cooling to room temperature, 37.1 parts of dimethylaminoethanol was added to neutralize the solution, and 100 parts of water was added to generate an aqueous solution. Subsequently, the mixture was heated to at least 100°C, and the butanol was removed by azeotropic distillation with the water to adjust the non-volatile fraction to 50%. This yielded an aqueous solution of the pigment dispersing resin 1 with a non-volatile fraction of 50%. The thus obtained pigment dispersing resin 1 had an acid value of 39 and a weight average molecular weight of 25,000.

The acid value of the pigment dispersing resin means the number of mg of potassium hydroxide required to neutralize the acid contained in 1 g of the pigment dispersing resin. The above measurement of the acid value was performed by dissolving the obtained dispersing resin in an ethanol/toluene solvent mixture to form a solution, and then performing a titration with a KOH solution. An "automatic potentiometric titrator AT-610" manufactured by Kyoto Electronics Manufacturing Co., Ltd. was used for performing the measurement.

The weight average molecular weight of the pigment dispersing resin represents the polystyrene-equivalent weight average molecular weight measured using a TSKgel column (manufactured by Tosoh Corporation) and a GPC fitted with an R1 detector (HLC-8129GPC manufactured by Tosoh Corporation), using THF as the eluent.

### (Pigment Dispersing Resins 2 to 22)

With the exception of using the materials shown in Table 1, aqueous solutions of pigment dispersing resins 2 to 22, each having a non-volatile fraction of 50%, were prepared using the same procedure as that described for the pigment dispersing resin 1. The amount of the initiator V-601 shown in Table 1 represents the amount of V-601 added at the same time as the polymerizable monomers.

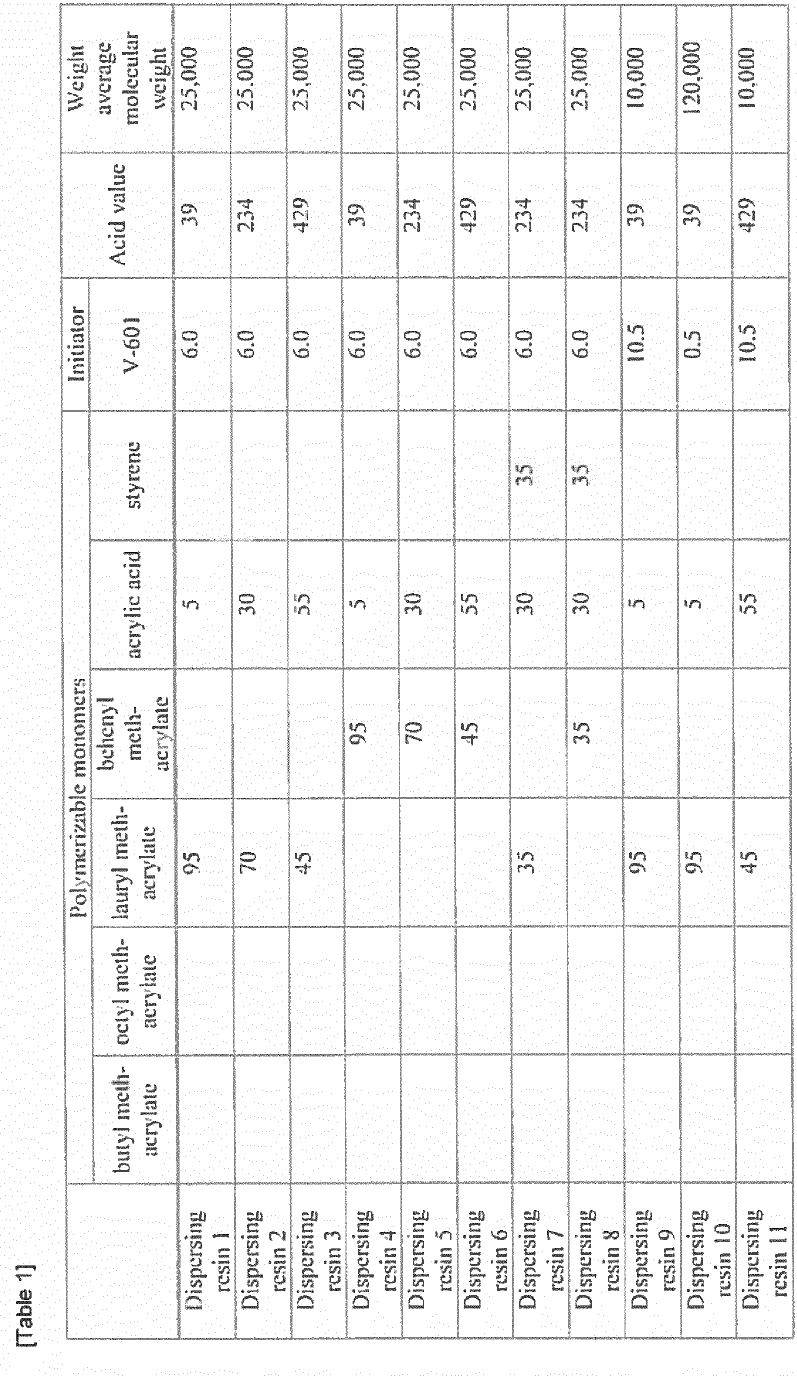

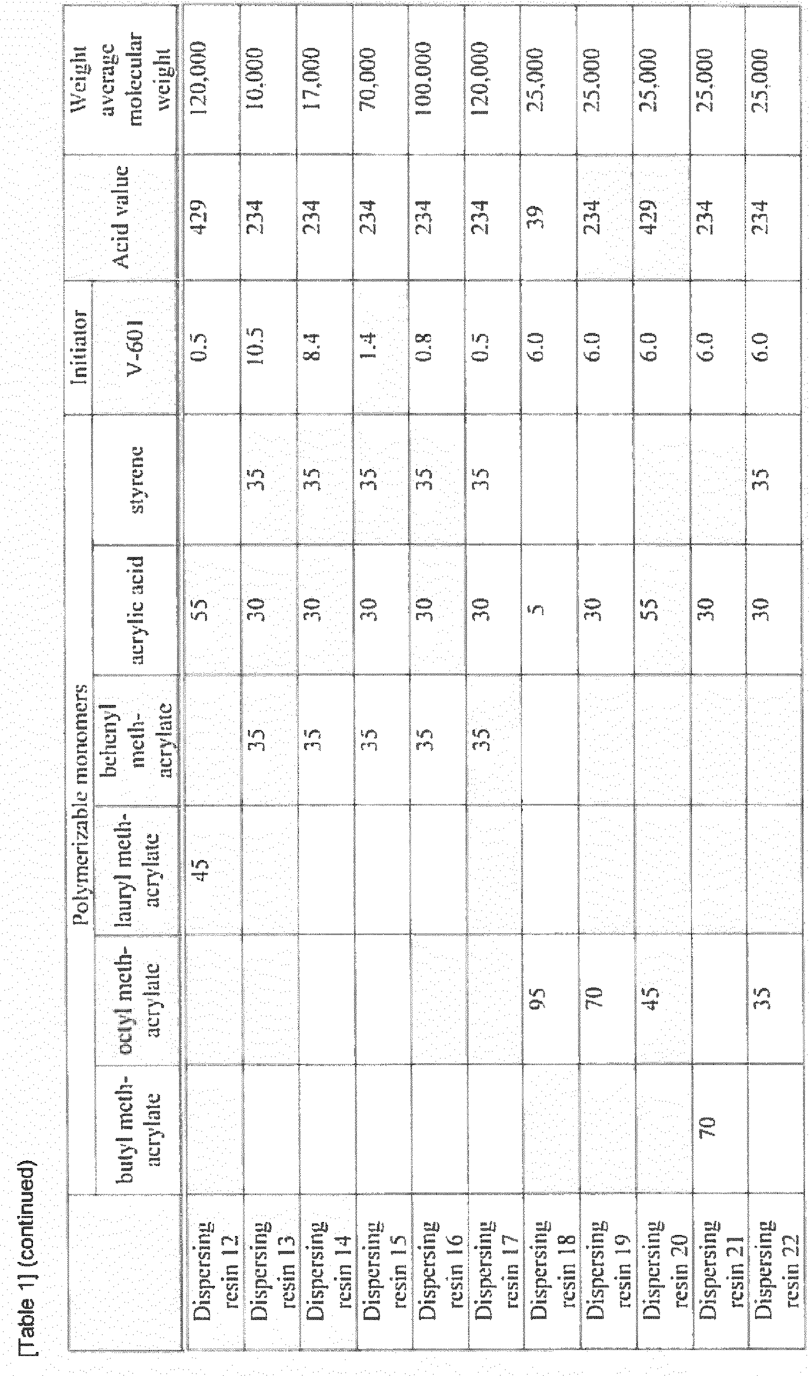

### 1B. Preparation of Pigment Dispersions

The pigments used in preparing the pigment dispersions were as follows.
Cyan Pigment:
   LIONOGEN BLUE 7351 (manufactured by Toyo Color Co., Ltd.)
Magenta Pigments:
   FASTOGEN SUPER MAGENTA RG (manufactured by DIC Corporation)
   CINQUASIA PINK D 4450 (manufactured by BASF Corporation)
   TOSHIKI RED 150TR (manufactured by Tokyo Shikizai Industry Co., Ltd.) Yellow Pigments:
   FAST YELLOW 7416 (manufactured by Sanyo Color Works, Ltd.)
   LIONOGEN YELLOW 1D250 (manufactured by Toyo Color Co., Ltd.)
   PALIOTOL YELLOW D 1155 (manufactured by BASF Corporation)
Black Pigment (Carbon Black):
   PRINTEX 85 (manufactured by Orion Engineered Carbons LLC)

### (Cyan Aqueous Pigment Dispersions 1, and 2 to 22)

Twenty parts of LIONOGEN BLUE 7351 as a pigment, 12 parts of the previously prepared aqueous solution of the pigment dispersing resin I and 68 parts of water were placed in a disper. Following preliminary dispersion of these components, a dyno mill with a capacity of 0.6 L filled with 1,800 g of zirconia beads of diameter 0.5 mm was used to perform the main dispersion over a period of two hours, thus obtaining a cyan aqueous pigment dispersion 1. At this point, the ratio between the pigment and the non-volatile fraction (solid fraction) of the pigment dispersing resin was pigment/pigment dispersing resin (solid fraction) - 10/3.

Further, with the exception of replacing the pigment dispersing resin I with each of the pigment dispersing resins 2 to 22, cyan aqueous pigment dispersions 2 to 22 were obtained using the same method as that described above for the cyan pigment dispersion 1.

### (Magenta Aqueous Pigment Dispersions I to 3)

With the exceptions of replacing the pigment with 20 parts of FASTOGEN SUPER MAGENTA RG, CINQUASIA PINK D 4450 or TOSHIKI RED 150TR, and using the pigment dispersing resin 8 as the pigment dispersing resin, magenta aqueous pigment dispersions 1 to 3 were obtained using the same method as that described above for the cyan pigment dispersion 1.

### (Yellow Aqueous Pigment Dispersions 1 to 3)

With the exceptions of replacing the pigment with 20 parts of FAST YELLOW 7416, LIONOGEN YELLOW ID250 or PALIOTOL YELLOW D 1155, and using the pigment dispersing resin 8 as the pigment dispersing resin, yellow aqueous pigment dispersions 1 to 3 were obtained using the same method as that described above for the cyan pigment dispersion 1.

### (Black Aqueous Pigment Dispersion)

With the exceptions of replacing the pigment with 20 parts of PRINTEX 85, and using the pigment dispersing resin 8 as the pigment dispersing resin, a black aqueous pigment dispersion was obtained using the same method as that described above for the cyan pigment dispersion 1.

### 1C. Preparation of Water-Soluble Resin Varnishes

A reaction container fitted with a gas inlet tube, a thermometer, a condenser and a stirrer was charged with 20 parts of JONCRYL 819, 2,38 parts of dimethylaminoethanol and 77.62 parts of water, thereby 100% neutralizing the acrylic acid and forming a water-soluble solution. One gram of the resulting solution was sampled, and dried by heating at 180°C over a period of 20 minutes to measure the non-volatile fraction. Subsequently, water was added to the solution to prepare a water-soluble resin varnish having a non-volatile fraction of 20%. This completed preparation of a water-soluble resin varnish having a non-volatile fraction of 20%.

### 2. Preparation of Aqueous Ink Compositions

### (Example 1)

Twenty parts of the cyan aqueous pigment dispersion 1, 13 parts of JONCRYL 538 as a binder resin, 5 parts of 1,2-propanediol, 5 parts of 2-methyl-1,3-propanediol and 57 parts of water were each weighed. These components were transferred sequentially to a mixing container while stirring was performed with a disper, and thorough stirring was continued until a uniform mixture was obtained. Subsequently, the resulting mixture was filtered through a membrane filter to remove the types of coarse particles that can cause head blockages, thus obtaining an aqueous ink composition. The viscosity of this aqueous ink composition was 5 mPa·s.

### (Examples 2 to 64, Comparative Examples I to 14)

Using the formulations of pigment dispersions, binder resins, solvents and surfactants shown in Table 2 to 5, aqueous ink compositions were prepared using the same method as that described for Example 1. Each of the obtained aqueous ink compositions was evaluated. In the preparation of each aqueous ink composition, the amounts added of the binder resin and water were adjusted so that the viscosity of the aqueous ink composition was 5 mPa·s.

Abbreviations used in Tables 2 to 5 are as follows.

### (Pigment Dispersions)

Cyan 1: corresponds with the previously prepared cyan pigment dispersion 1. Similar abbreviations correspond with each of the other prepared pigment dispersions.

### (Binder Resins)

A: resin microparticles "JONCRYL 538": a styrene/acrylic resin emulsion manufactured by BASF Japan Ltd., glass transition temperature (Tg): 64°C, solid fraction: 46%, and weight average molecular weight: at least 200,000.
B: a water-soluble resin varnish "JONCRYL 819": a styrene/acrylic water-soluble resin manufactured by BASF Japan Ltd., weight average molecular weight: 14,500, acid value: 75 mgKOH/g.

### (Solvents)

1,2-PD: 1,2-propanediol
1,2-BD: 1,2-butanediol
1,3-BD: 1,3-butanediol
1,2-PenD: 1,2-pentanediol
1,5-PenD: 1,5-pentanediol
1,2-HexD: 1,2-hexanediol
2-methyl-1,3-PD: 2-methyl-1,3-propanediol
2-ethyl-1,3-HexD: 2-ethyl-1,3-hexanediol
1,2-CHD: 1,2-cyclohexanediol
1,3-CHD: 1,3-cyclohexanediol
DPG: dipropylene glycol

### (Surfactants)

A: BYK333: a silicon-based surfactant manufactured by BYK Chemie GmbH, a compound represented by general formula (2).
B: TegoWet 280: a silicon-based surfactant manufactured by Evonik Degussa GmbH, a compound represented by general formula (3).
C: SILFACE 503A: a silicon-based surfactant manufactured by Nissin Chemical Industry Co., Ltd., a compound represented by general formula (3).

In table 2 Examples 1-4 are Reference Examples not according to the invention.

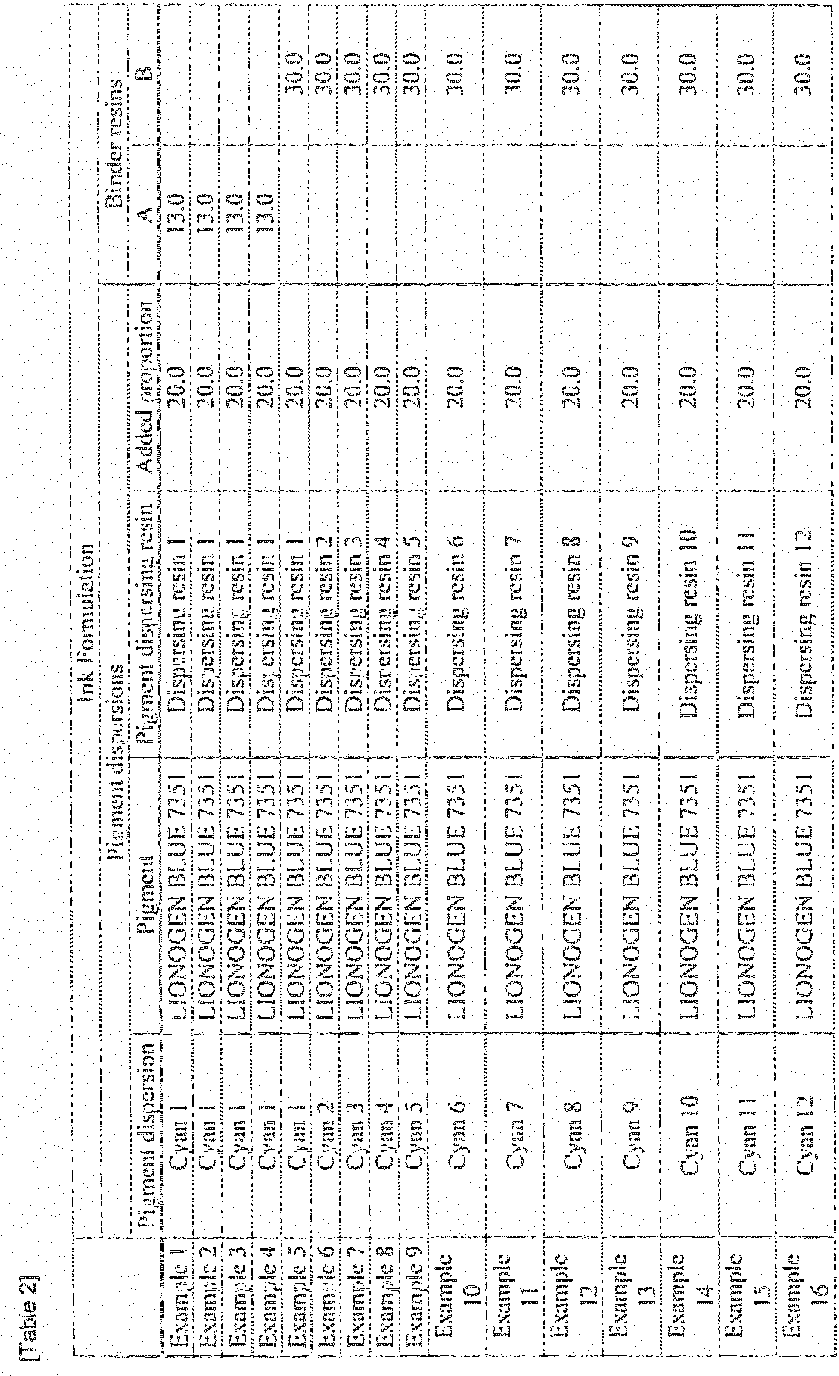

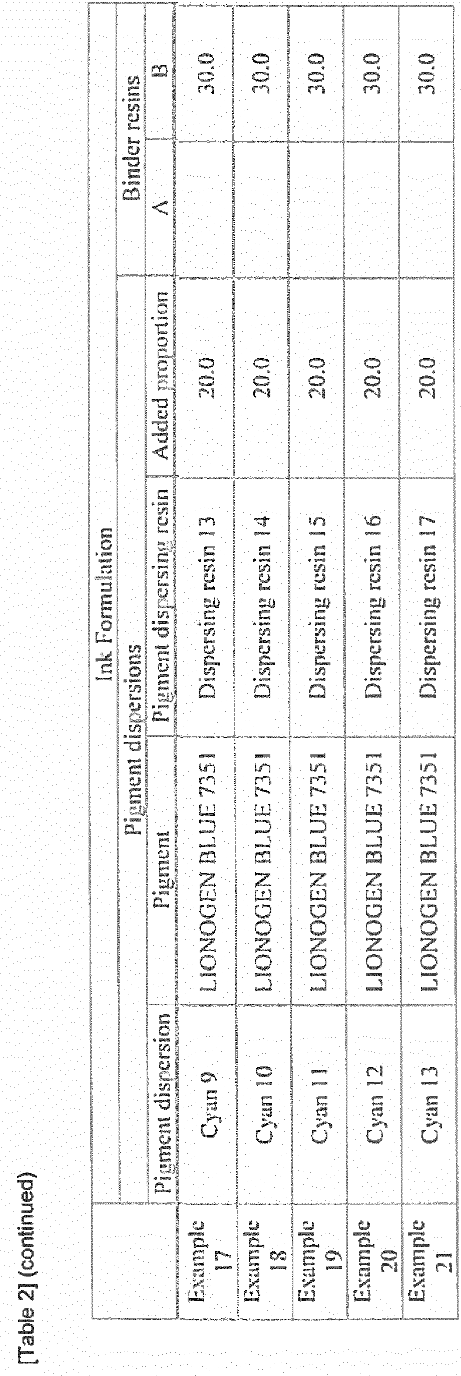

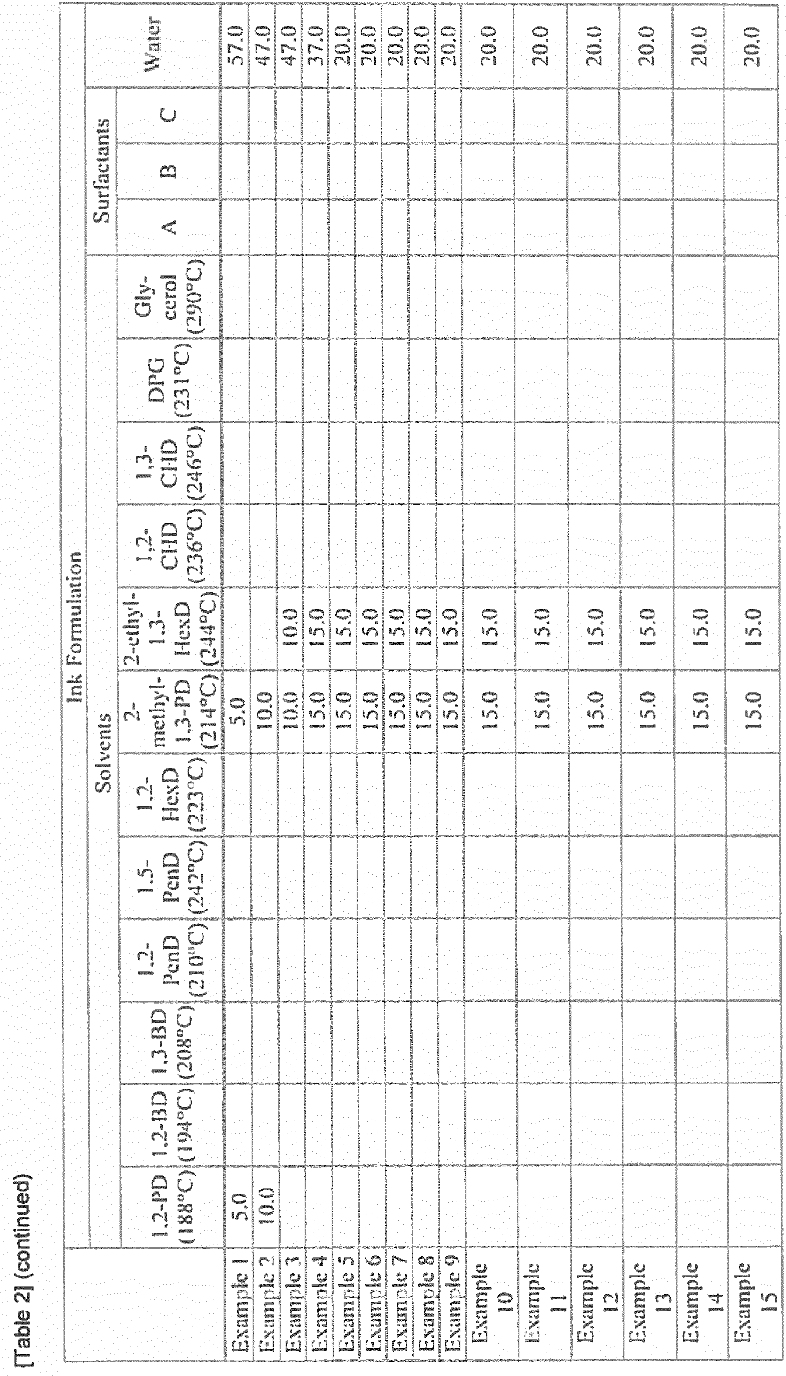

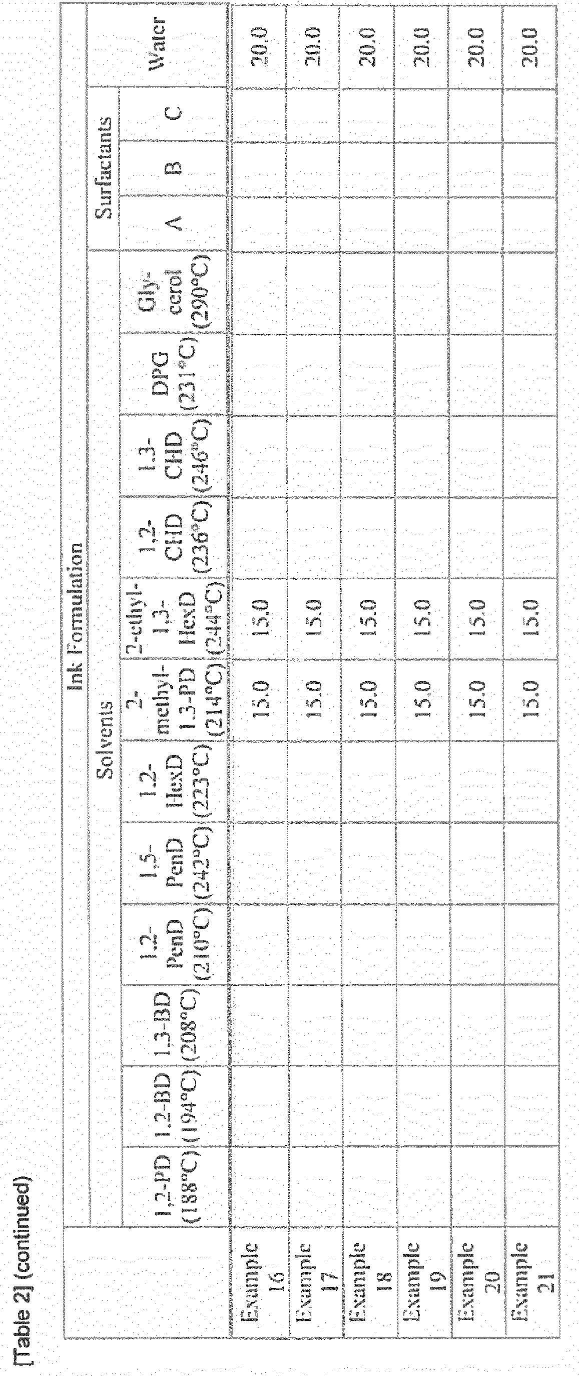

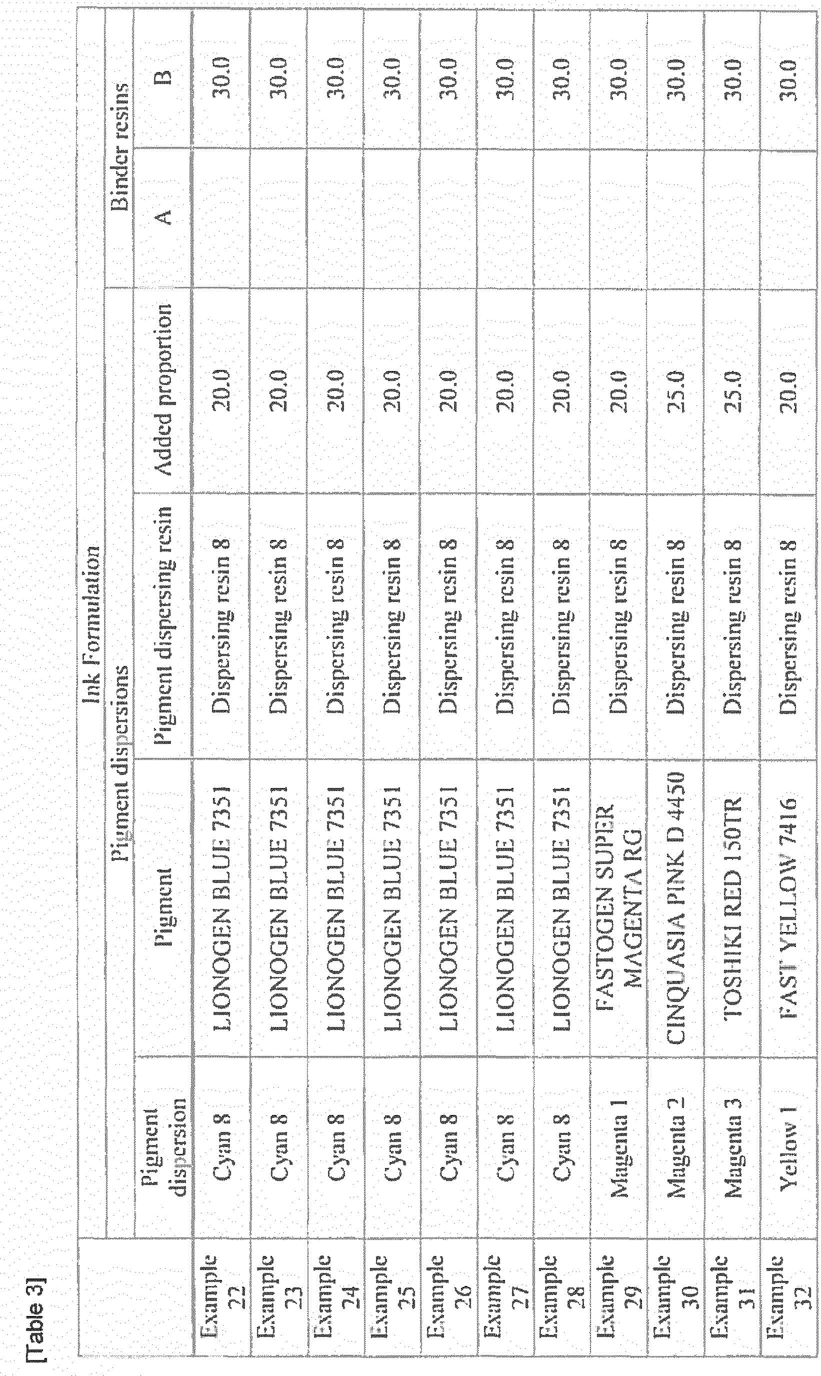

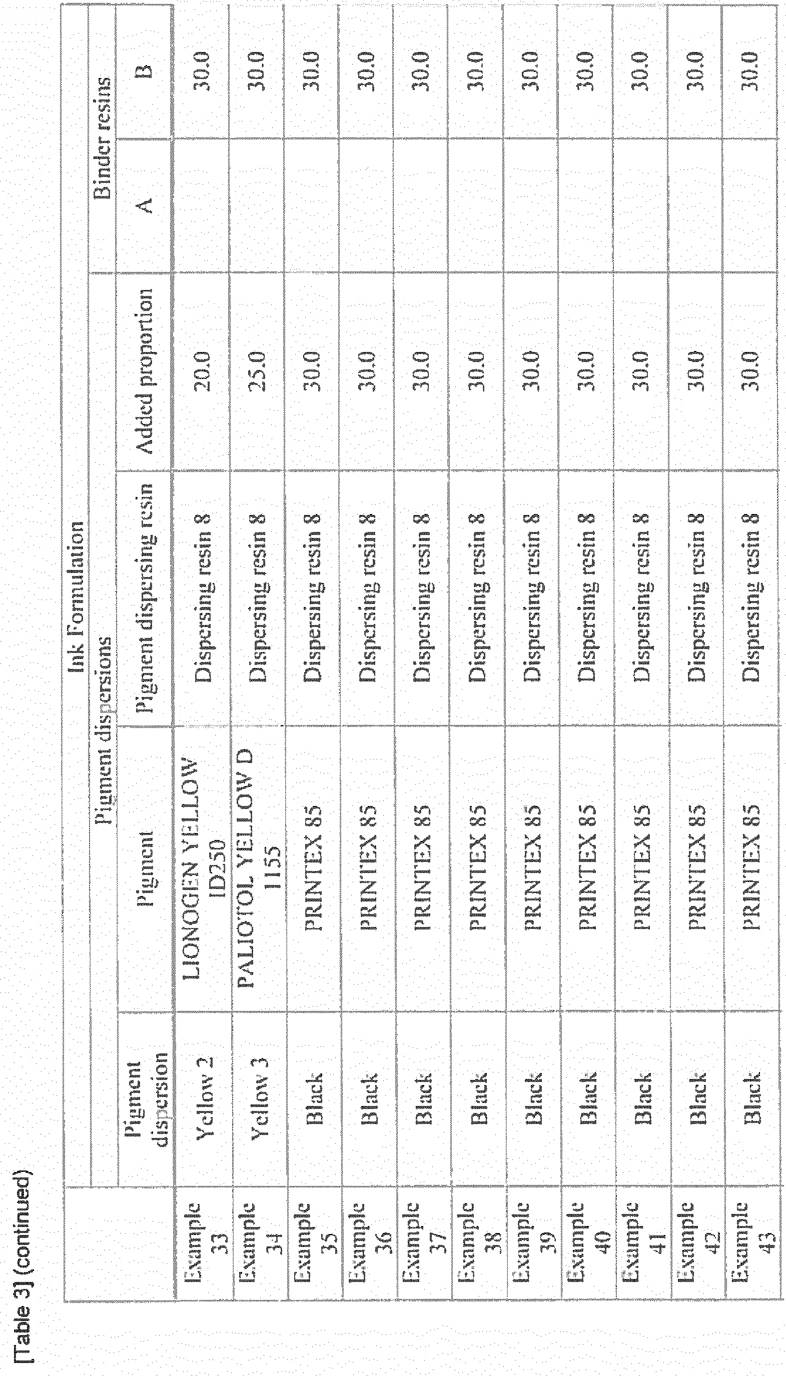

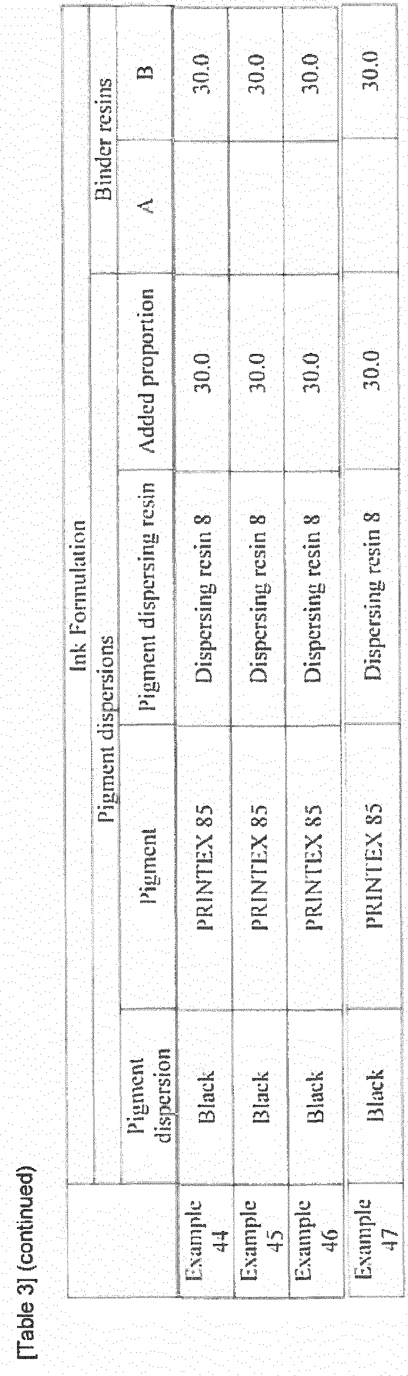

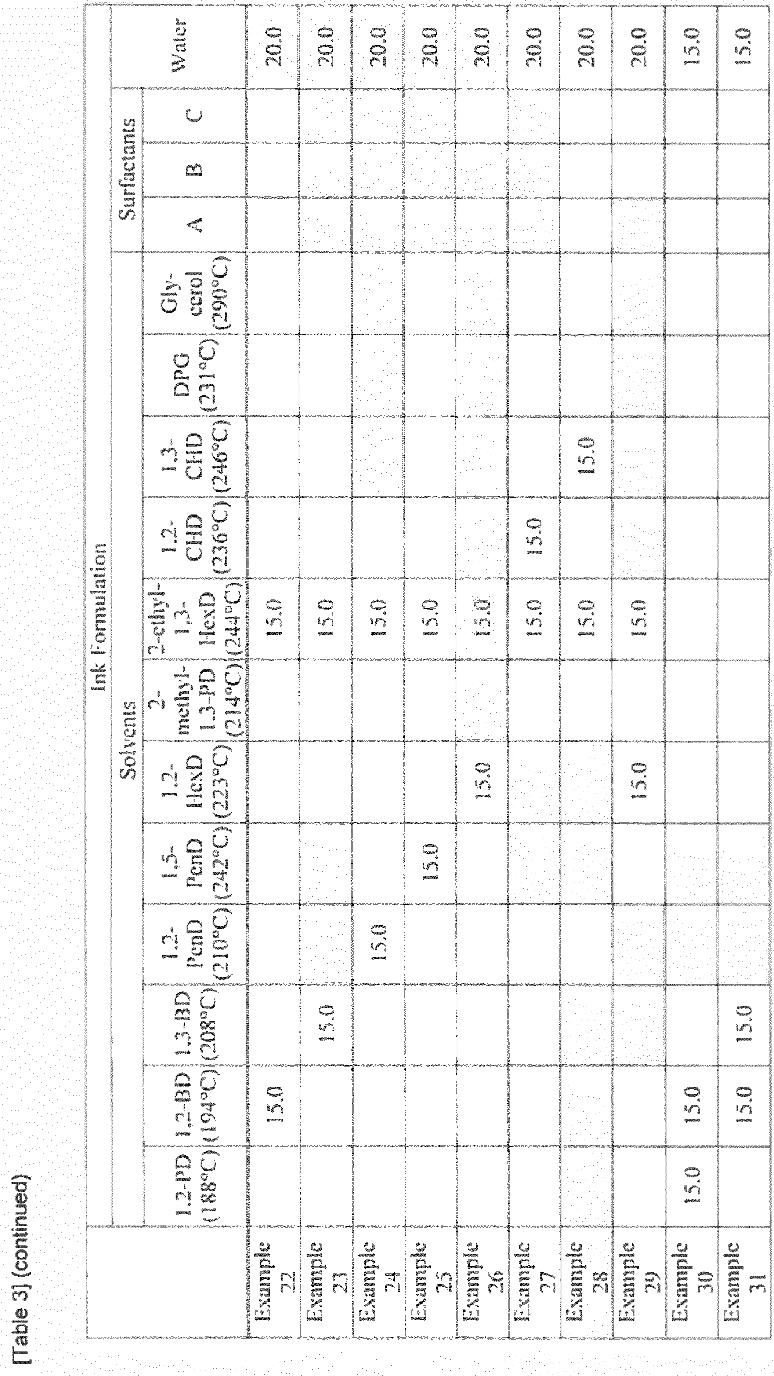

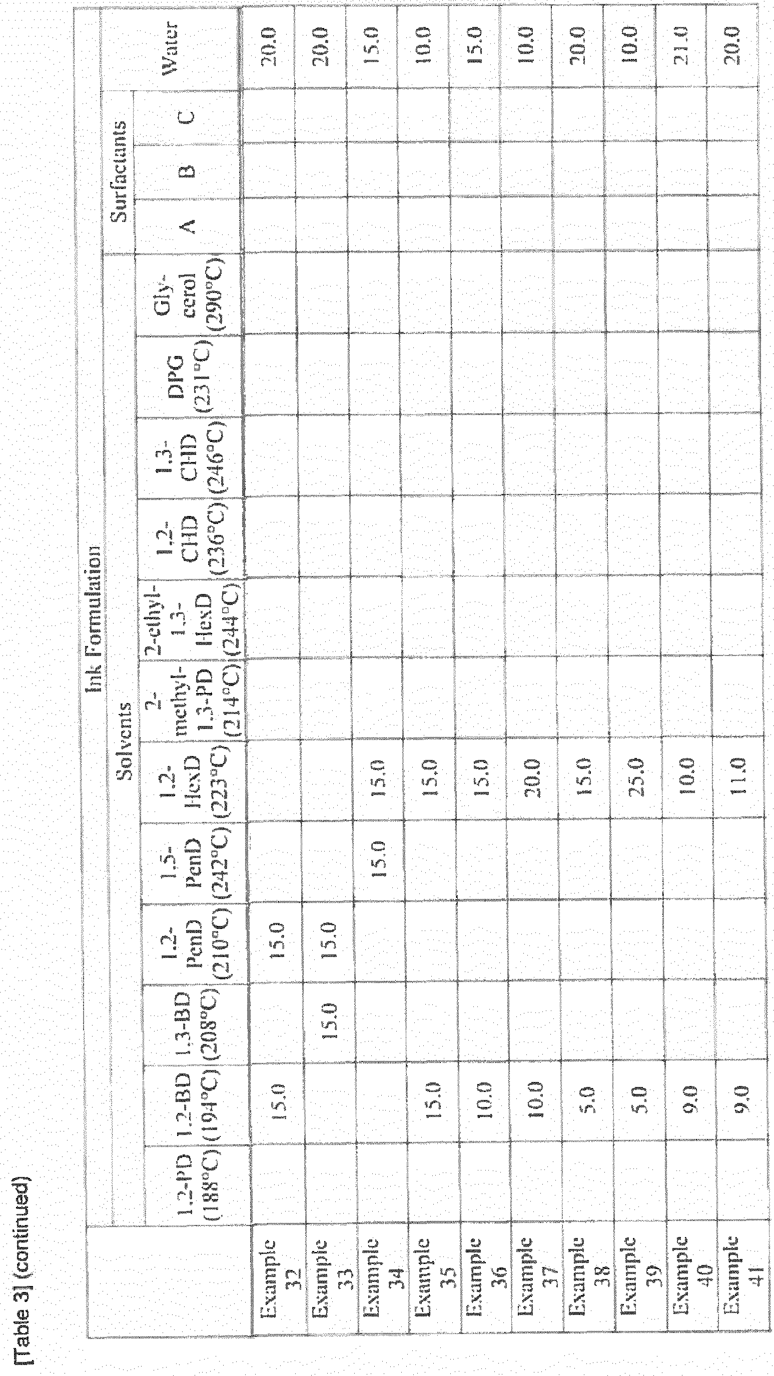

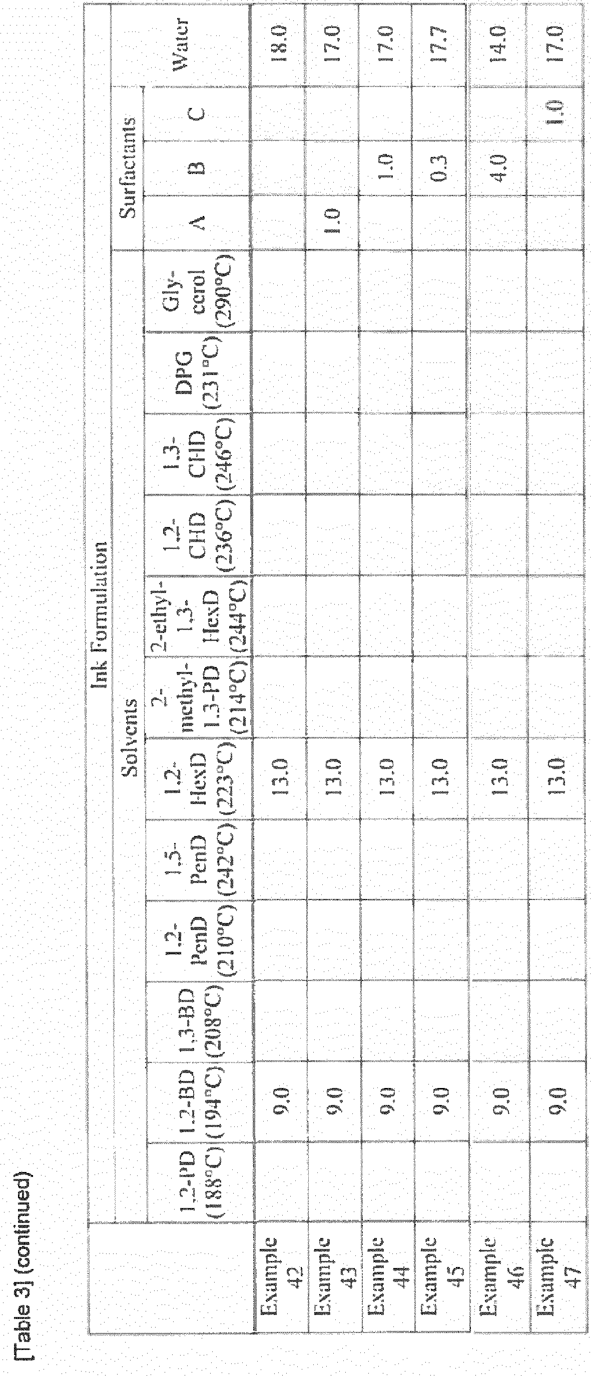

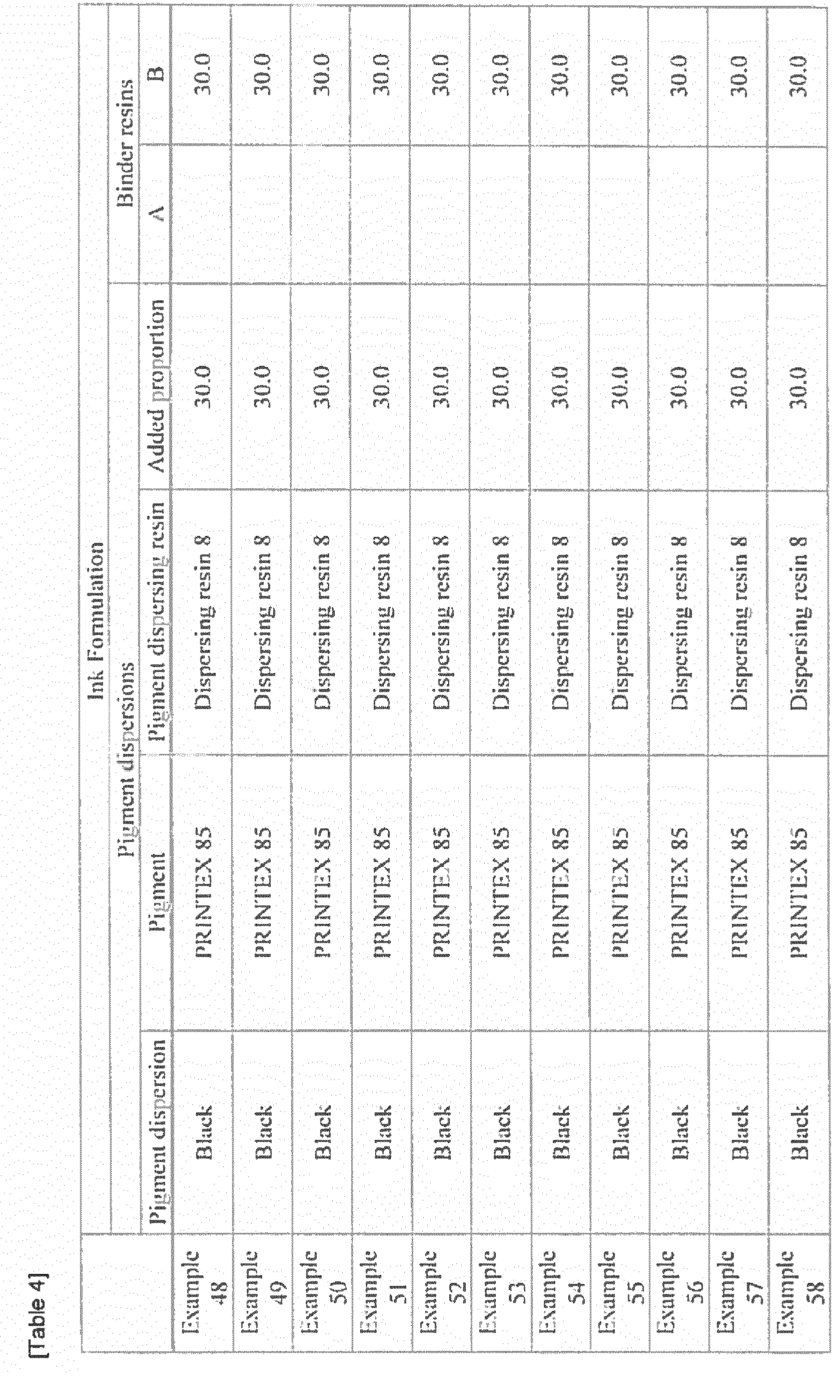

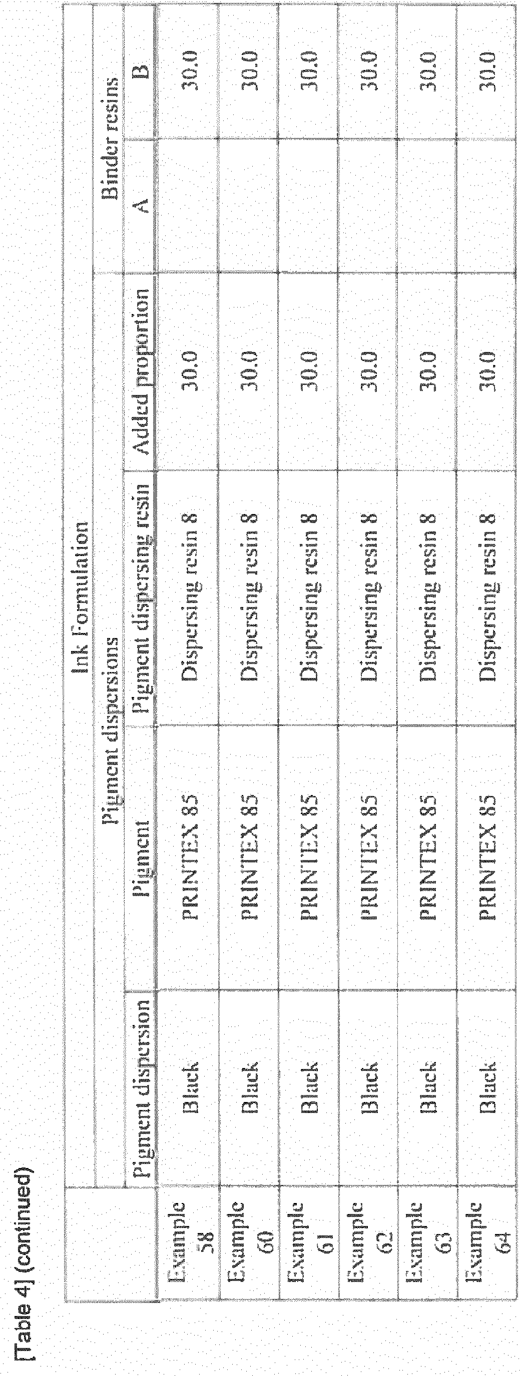

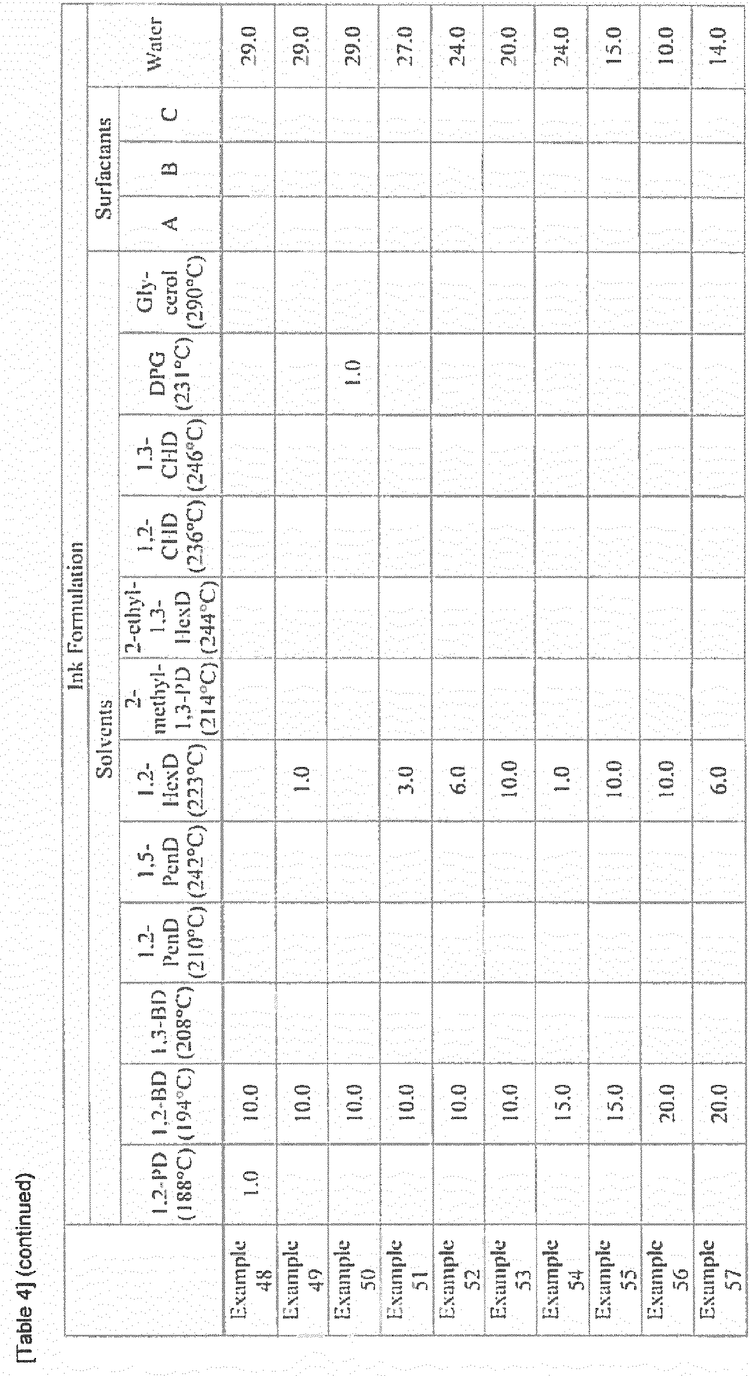

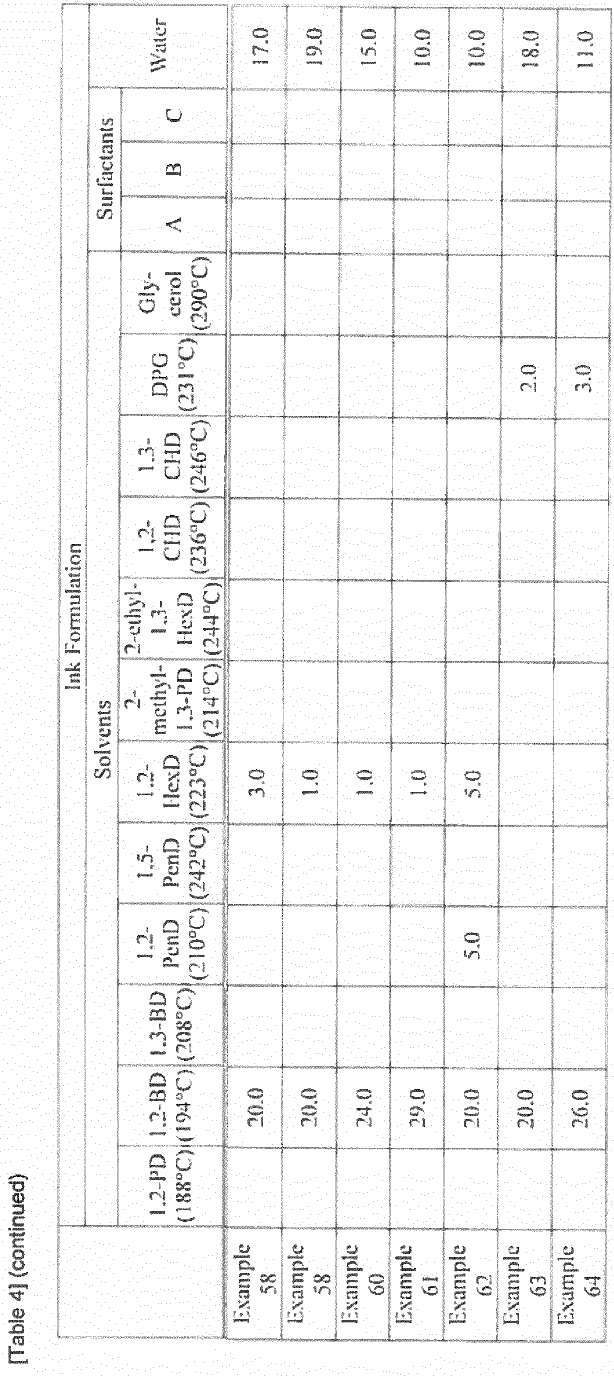

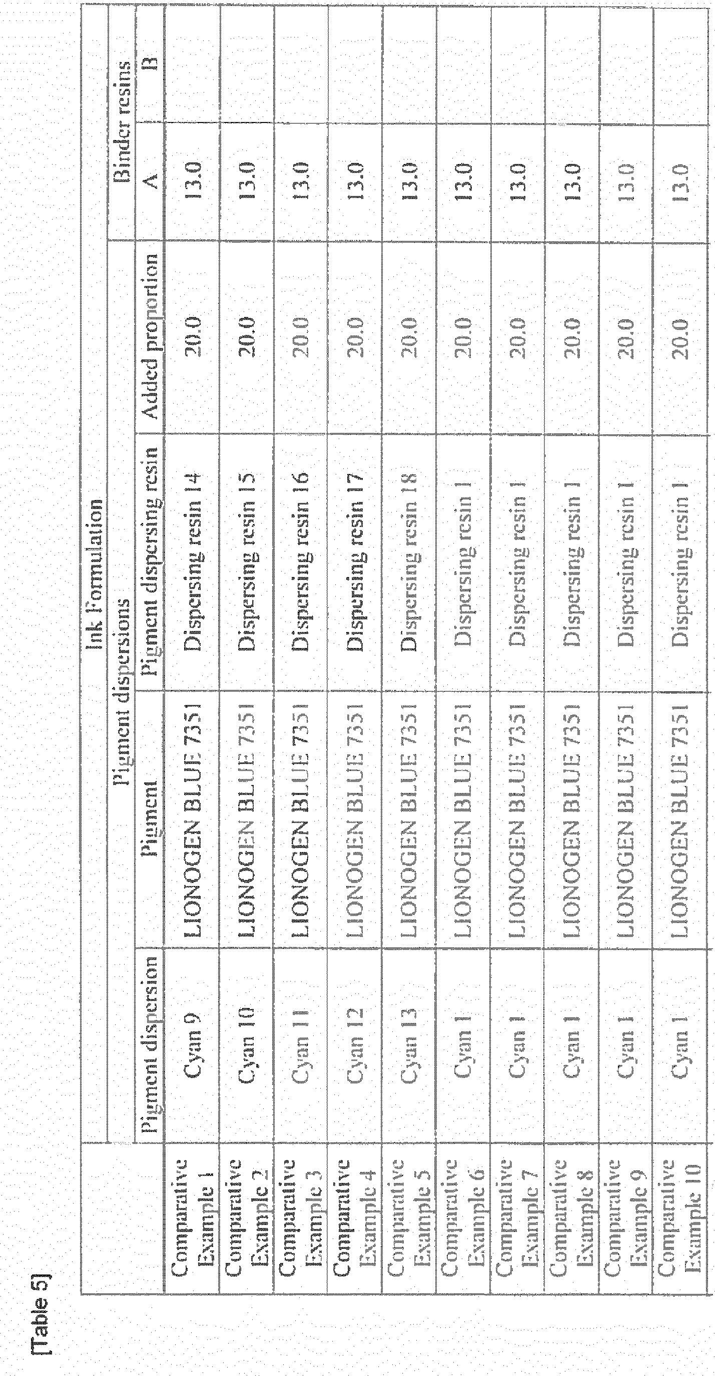

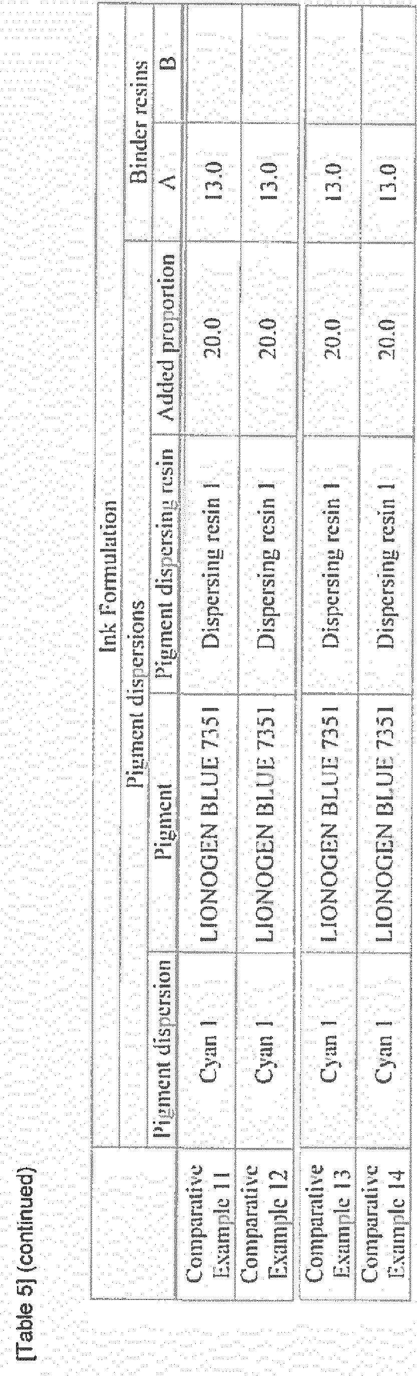

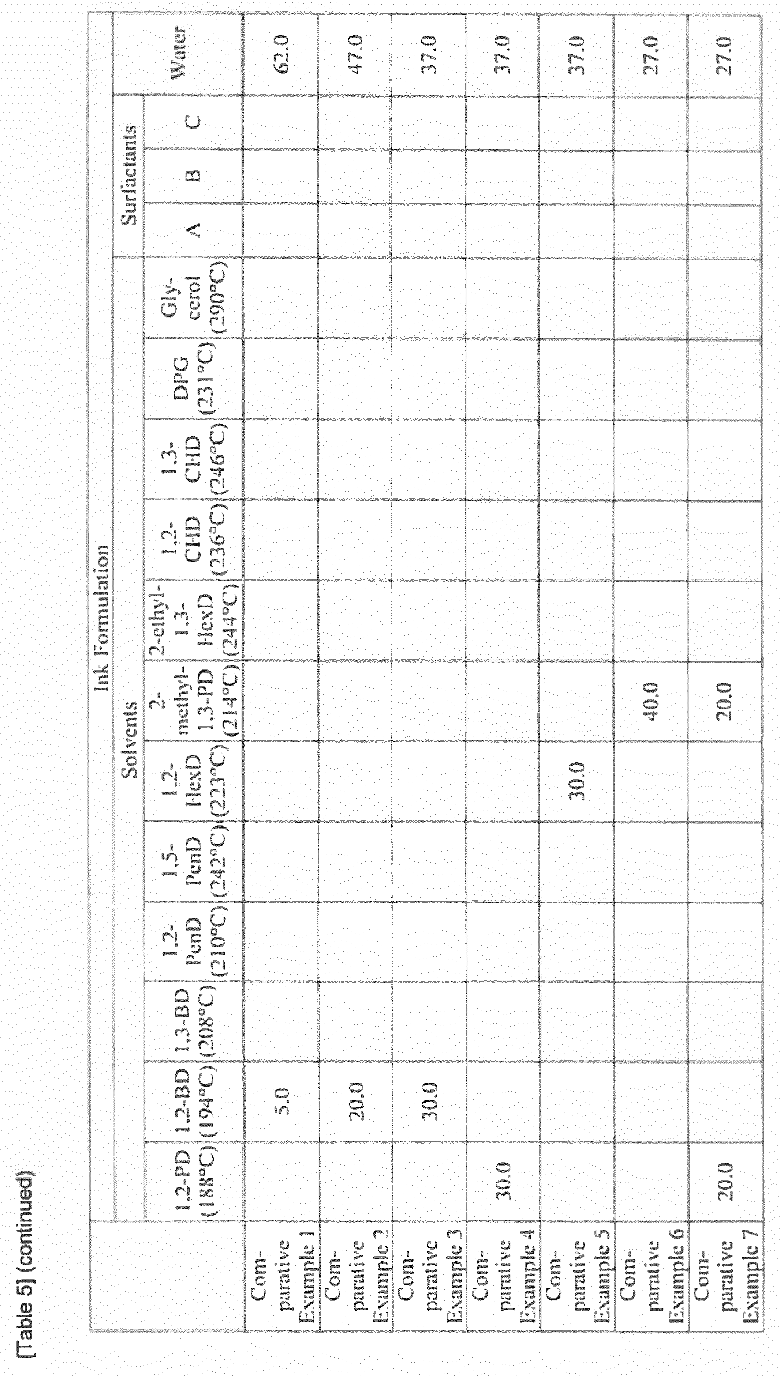

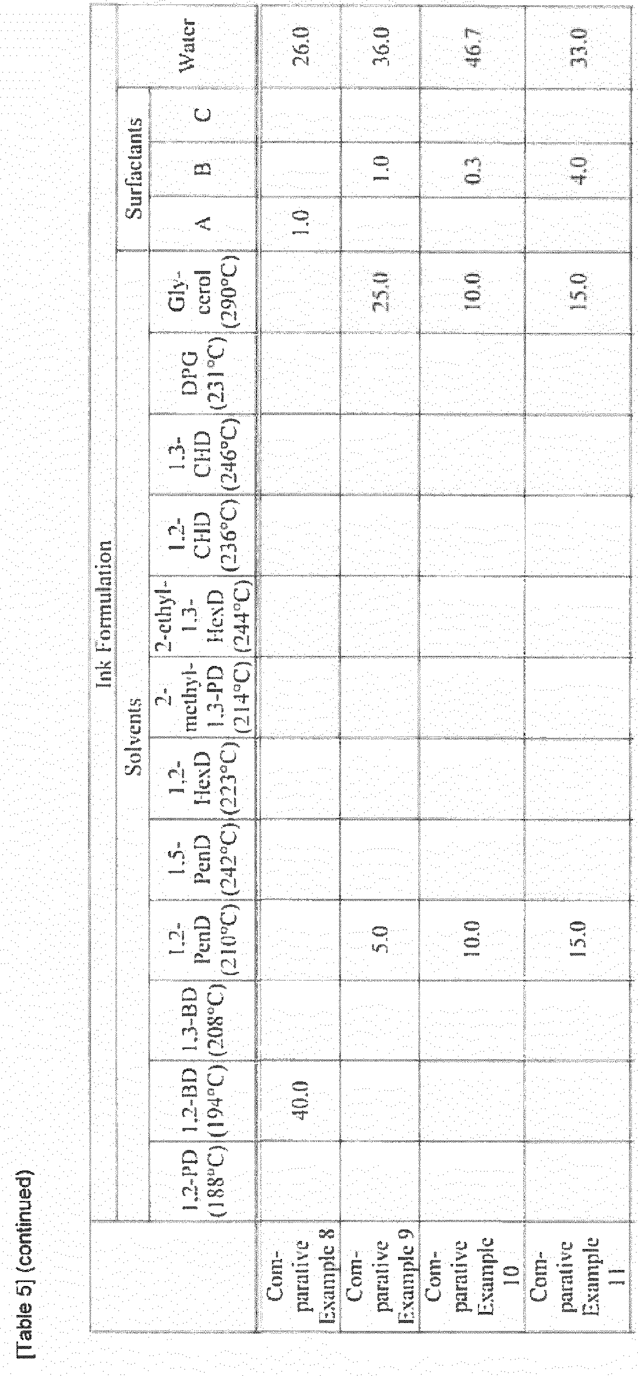

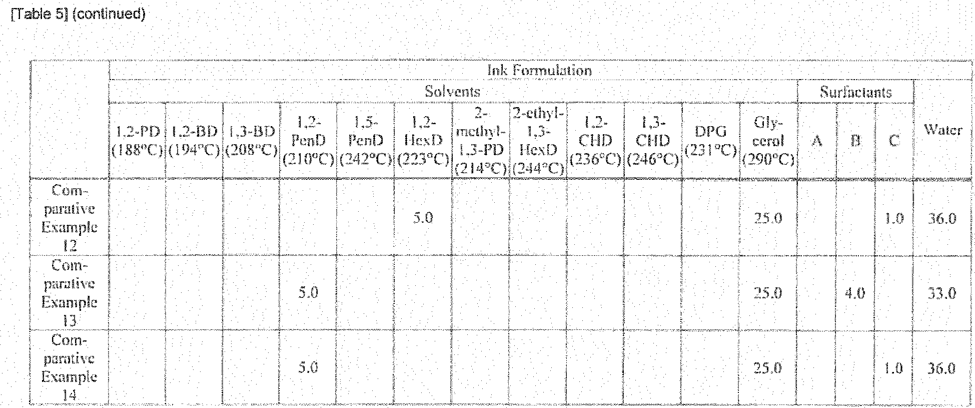

### 3. Evaluation of Aqueous Ink Compositions

Using the aqueous ink compositions (hereafter also referred to as "inks") obtained in Examples 1 to 64 and Comparative Examples I to 14, the following evaluations were performed.

### (Color Development Test)

Each of the aqueous ink compositions obtained in Examples I to 64 and Comparative Examples 1 to 14 was loaded into an inkjet printer having piezo elements (Inkjet Printer VJ-1608HSJ, manufactured by Mutoh Industries, Ltd.) in an environment at 25°C, and solid printing with a coverage rate of 100% was performed on each of the following substrates while the substrate was heated at 50°C. Each of the thus obtained printed items having a coverage rate of 100% was evaluated visually for the degree of white voids, and a density (OD value) measurement was performed using a colorimeter (eye-one pro, manufactured by X-Rite, Inc.). The measurement conditions were as follows. Observation light source: D50, observation field of view: 2°, density: ANSI T, white standard: Abs, measurement mode: reflectance.

### Evaluation Substrates

Polyvinyl chloride (PVC) sheet: MD-5, manufactured by Metamark Ltd.
Plain paper: NPI high-quality paper, manufactured by Nippon Paper Industries Co., Ltd. (grammage: 81.4 g/m²)
Fabric substrate: TYVEK 1082D, manufactured by E. 1. du Pont de Nemours and Company
Coated paper: OK TopCote+, manufactured by Oji Paper Co., Ltd. (grammage: 104.7 g/m²)

Based on each of the obtained measurements, the color development was evaluated against the following evaluation criteria. A practically applicable level is deemed to be an evaluation value of 2 or higher.

### (Evaluation Criteria)

5: the ink spreads satisfactorily regardless of substrate, and no voids are visible. The difference in density (OD) values of the 100% coverage rate printed items across the various substrates is within ±0.3.
4: the ink spreads satisfactorily regardless of substrate, and no voids are visible. The difference in density (OD) values of the 100% coverage rate printed items across the various substrates is within ±0.5.
3: the ink spreads satisfactorily regardless of substrate, and no voids are visible. The difference in density (OD) values of the 100% coverage rate printed items across the various substrates is within ±1.0.
2: the ink spreading differs depending on the substrate, and voids exist on some substrates. The difference in density (OD) values of the 100% coverage rate printed items across the various substrates is 1.0 or greater.
1: the ink spreading differs depending on the substrate, and voids exist. The difference in density (OD) values of the 100% coverage rate printed items across the various substrates is 1.0 or greater.

### (Ink Viscosity Stability)

Using an E-type viscometer (TVE-20L manufactured by Toki Sangyo Co., Ltd.), a viscosity measurement was performed for each ink at 25°C and a rotational rate of 50 rpm. Subsequently, each ink was stored in a thermostatic container at 70°C, and after a period of accelerated aging, the viscosity of the aged ink was measured, and the change in viscosity of the ink over the aging period was evaluated. The evaluation criteria were as follows. A practically applicable level is deemed to be an evaluation value of 2 or higher.

### (Evaluation Criteria)

5: the change in viscosity after storage for 6 weeks is less than ±10%
4: the change in viscosity after storage for 4 weeks is less than ±10%
3: the change in viscosity after storage for 2 weeks is less than ±10%
2: the change in viscosity after storage for 1 week is less than ±10%
1: the change in viscosity after storage for 1 week is ± 10% or greater

### (Ink Dispersion Stability)

Each ink was diluted 200-fold with ion-exchanged water, and a Microtrac UPA150 (manufactured by Nikkiso Co., Ltd.) was used to measure the dispersed particle diameter of the pigment in the ink. Subsequently, the ink was stored at 70°C in a thermostatic container, and after accelerated aging, the dispersed particle diameter of the aged ink was measured. Based on these results, the change in the dispersed particle diameter of the ink over the aging period was determined, and the dispersion stability was evaluated based on this value. This evaluation was performed using the average particle size (D50 value), and the evaluation criteria were as follows. A practically applicable level is deemed to be an evaluation value of 2 or higher.

### (Evaluation Criteria)

5: the change in average particle size after storage for 6 weeks is less than ±50 nm
4: the change in average particle size after storage for 4 weeks is less than ±50 nm
3: the change in average particle size after storage for 2 weeks is less than ±50 nm
2: the change in average particle size after storage for I week is less than ±50 nm
1: the change in average particle size after storage for I week is 50 nm or greater

### (Dot Formation)

Each ink was used to fill a cartridge of an inkjet printer (PM-750C manufactured by Epson Corporation), and solid printing with a coverage rate of 30% was performed on a coated paper and a high-quality paper. For the coated paper, OK TopKote + manufactured by Oji Paper Co.. Ltd. (grammage: 104.7 g/m²) was used. Further, for the high-quality paper, NP1 high-quality paper manufactured by Nippon Paper Industries Co., Ltd. (grammage: 81.4 g/m²) was used.

Next, the printed surface of each printed sample was inspected under a magnifying glass, and the dot formation, including the levels of dot linkage and bleeding, was evaluated. The evaluation criteria were as follows. A practically applicable level is deemed to be an evaluation value of 2 or higher.

### (Evaluation Criteria)

5: dot linkage and bleeding do not occur regardless of the printing substrate.
4: slight dot linkage occurs depending on the printing substrate. No bleeding occurs.
3: slight dot linkage occurs regardless of the printing substrate. No bleeding occurs.
2: slight dot linkage occurs regardless of the printing substrate. Slight bleeding occurs.
1: dot linkage occurs regardless of the printing substrate. Bleeding also occurs.

### (Drying Properties Evaluation 1)

Using an inkjet printer VJ-1608HSJ (manufactured by Mutoh Industries, Ltd.), which is a shuttle printer, solid printing with a 100% coverage rate was performed onto PVC sheets (MD-5 manufactured by Metamark Ltd.) using different numbers of printing passes. For each printed item, the occurrence of mottling (irregularities) was inspected visually to evaluate the drying properties. The evaluation criteria were as follows. A practically applicable level is deemed to be an evaluation value of 2 or higher.

### (Evaluation Criteria)

5: no mottling occurs when printing is performed using 4 printing passes.
4: no mottling occurs when printing is performed using 8 printing passes.
3: no mottling occurs when printing is performed using 16 printing passes.
2: no mottling occurs when printing is performed using 32 printing passes.
1: mottling occurs even when printing is performed using 32 printing passes.

### (Drying Properties Evaluation 11)

Using an inkjet printer Oce Monostream 500 (manufactured by Canon Production Printing Systems Inc.), which is a fixed head printer, one-pass printing with a coverage rate of 100% was performed onto a matte coated paper (Mitsubishi DF Color Matte M, grammage: 104.7 g/m²). The occurrence of mottling (irregularities) when the printing speed was changed was inspected visually to evaluate the drying properties.

The evaluation criteria were as follows. A practically applicable level is deemed to be an evaluation value of 2 or higher.

### (Evaluation Criteria)

5: no mottling occurs when printing is performed at a printing speed of 80 m/minute.
4: no mottling occurs when printing is performed at a printing speed of 70 m/minute.
3: no mottling occurs when printing is performed at a printing speed of 60 m/minute.
2: no mottling occurs when printing is performed at a printing speed of 50 m/minute.
1: mottling occurs even when printing is performed at a printing speed of 50 m/minute.

### (Decap Properties)

Using an inkjet printer Oce Monostream 500 manufactured by Canon Production Printing Systems Inc., an unprinted portion of a fixed distance was provided, and then the image data for printing a nozzle check pattern was used to perform one-pass printing. The existence of discharge faults in the nozzle check pattern when the length of the unprinted portion was varied was ascertained visually to evaluate the decap properties. The evaluation criteria were as follows. A practically applicable level is deemed to be an evaluation value of 2 or higher.

### (Evaluation Criteria)

5: no discharge faults occur even when the unprinted portion length is 100 cm or more.
4: no discharge faults occur when the unprinted portion length is at least 70 cm but less than 100 cm.
3: no discharge faults occur when the unprinted portion length is at least 50 cm but less than 70 cm.
2: no discharge faults occur when the unprinted portion length is at least 30 cm but less than 50 cm.
1: discharge faults occur even when the unprinted portion length is less than 30 cm.

The results for the ink compositions of Examples I to 64 of the evaluations performed in the above manner are shown in Table 6 and Table 7. Further, the results for the ink compositions of Comparative Examples 1 to 14 are shown in Table 8.

Examples 1 to 64 relate to inks of embodiments in which the amount added of the two or more types of alkyl polyols having boiling points of at least 180°C but not more than 250°C at 1 atmosphere is controlled to a value of at least 10% by weight but not more than 30% by weight, and in which the pigment dispersing resin has an alkyl group of at least 10 carbon atoms but not more than 36 carbon atoms. As is evident from the results shown in Table 6 and Table 7, the inks according to these embodiments of the present invention were able to achieve practically applicable levels for all of the evaluations.

Specifically, it is evident that, in a comparison with the comparative examples described below, Examples 1 to 5 and 8 exhibited improvements in the color development, dot formation and drying properties, while maintaining the viscosity and dispersion stability. Examples 5 and 8 relate to embodiments in which the resin microparticles used as a binder resin in Examples 1 to 4 were replaced with a water-soluble resin varnish. Comparison of these examples reveals no significant change in any of the evaluations. However, when a water-soluble resin varnish is used, printing using an inkjet printer can be performed in a stable manner, and fluctuations in the evaluations tended to be smaller. For these types of reasons, the examples from Example 5 onward used a water-soluble resin varnish as the binder resin. In other words, the embodiments of the examples from Example 5 onward are not intended to limit the binder resin, and it should be understood that similar results could also be achieved in embodiments that used resin microparticles.

Examples 6, 7, and 9 to 12 use inks of embodiments in which the pigment dispersing resin has an alkyl group of 10 to 36 carbon atoms, and the pigment dispersing resin has an acid value of 50 to 400 mgKOH/g. It is evident that by using these types of embodiments, the ink viscosity and the dispersion stability can be further improved. In particular, the inks of Examples 2, 5, 7 and 8, in which the dispersing resin acid value was from 150 to 300 mgKOH/g, exhibited particularly superior results for each of the evaluations. Among these inks, Examples 7 and 8 in which the raw material monomers for the pigment dispersing resin included styrene exhibited particularly favorable results.

Examples 13 to 21 use inks that differ in terms of the weight average molecular weight of the pigment dispersing resin. Using the pigment dispersing resin 8 used in Example 12 as a reference formulation, it was found that in Examples 17 to 21, which used pigment dispersing resins having different weight average molecular weights, the ink viscosity stability and the storage stability improved as the weight average molecular weight increased. On the other hand, it is evident that the decap properties, which are important in terms of printability, tended to deteriorate. As the weight average molecular weight of the pigment dispersing resin increases, the adsorption capability relative to the pigment improves, and the dispersion stability improves. On the other hand, as the weight average molecular weight of the pigment dispersing resin increases, volatilization of water in the inkjet head nozzles tends to cause a rapid increase in the ink viscosity, making discharge from the inkjet head more difficult. Based on these observations, it is thought that when print data having large unprinted portions is used, discharge faults tend to increase, indicating a deterioration in the decap properties. Based on the results of the above examples, it is evident that the weight average molecular weight of the pigment dispersing resin is preferably about 20,000 to 80,000.

Examples 22 to 29 use inks of embodiments in which an alkanediol is used for at least a portion of the two or more types of alkyl polyols having boiling points of at least 180°C but not more than 250°C at 1 atmosphere. In these embodiments, the drying properties evaluations were favorable for both the shuttle printer and the one-pass printer for high-speed printing. In Examples 22, 24 and 26, which used a 1,2-alkanediol, particularly superior results were obtained. It is thought that this is because alkanediols have a lower boiling point at I atmosphere than other alkyl polyols, and therefore volatilize more readily. In actual fact, despite the fact that the alkanediols used in the inks of Examples 22, 24 and 26 used solvents having high boiling points exceeding 200°C, each example exhibited favorable results for the drying properties.

In particular, Examples 24 and 26 use inks of embodiments that include at least 10% by weight of a 1,2-alkanediol of at least 5 carbon atoms. By using these embodiments, the wetting properties and penetration relative to the printing substrate improve, and the drying properties can also be further improved, referring to the results of Example 29, it is evident that these tendencies do not change even when the type of pigment used in the pigment dispersion is changed.

Examples 29 to 47 use inks of embodiments in which the two or more types of alkyl polyols having boiling points of at least 180°C but not more than 250°C at I atmosphere are composed solely of alkanediols, and the amount added of those alkanediols is at least 10% by weight but not more than 30% by weight. By using these types of embodiments, the quality of printed items on PVC sheets can be improved when printing using a shuttle printer, which is a technique mainly used when preparing advertising signboards and the like. Further, it is thought that by using these types of embodiments, because the ink drying speed on PVC sheets and the wetting properties and penetration relative to the printing substrate can be better controlled, more favorable results can be obtained in the shuttle printer evaluations.

Among the above examples, Examples 32 to 39 and Examples 41 to 47 use inks of embodiments in which the amount of 1,2-alkanediols of at least 5 carbon atoms is greater than 10% by weight but not more than 30% by weight. By using these types of embodiments, it is evident that the wetting properties on vinyl chloride substrates can be improved, even when the amount of added solvent in the ink is small. Further, by using a high-boiling point solvent, any rapid increase in the ink viscosity on the inkjet head nozzles can be prevented, meaning the image quality can be improved in the evaluations using a shuttle printer. In particular, Examples 43 to 47 use inks of embodiments that also contain a surfactant. Based on these embodiments, it is evident that adding the surfactant yields a further improvement in the wetting properties and penetration on PVC sheets.

Examples 48 to 64 relate to embodiments using inks for printing with a fixed head high-speed printer typically used in print-on-demand applications, and represent the results of evaluating the print quality when performing one-pass printing on a coated paper that represents a low-absorption substrate. Generally, in order to enable a high-quality image to be printed to a substrate being transported at high speed, as well as ensuring favorable drying properties, a solvent having a boiling point of 200°C or lower (a low-boiling point solvent) is preferably used. However, if the proportion of this low-boiling point solvent is too large, then water and solvent tend to volatilize more readily on the inkjet head, resulting in a rapid increase in the ink viscosity. In actuality, referring to the results of Examples 48 to 50, 63 and 64, a deterioration in the decap properties that is thought to be due to the reasons outlined above is observed in Example 48 in which only low-boiling point solvents were used. In contrast, it is evident that in Examples 49, 50, 63 and 64, in which a solvent having a boiling point exceeding 200°C (a high-boiling point solvent) was also used, an improvement in the decap properties was obtained. In particular, when a 1,2-alkanediol of at least 5 carbon atoms was used, as was the case in Example 49, improvements can be achieved not only in the decap properties, but also in the wetting properties and penetration relative to coated paper substrates. As a result, the image quality when printing by one-pass printing using a fixed head printer can be improved. Further, it is evident that any deterioration in the decap properties can be suppressed, even in cases such as Examples 63 and 64 in which the amount of low-boiling point solvent is increased. In these types of embodiments, favorable results can be obtained for both the drying properties and the decap properties.

On the other hand, referring to the results of Examples 51 to 53, it is evident that although increasing the amount added of the 1,2-alkanediol of at least 5 carbon atoms improves the decap properties, the drying properties when performing one-pass printing with a fixed head printer tend to deteriorate. It is thought that this is because increasing the proportion of the 1,2-alkanediol of at least 5 carbon atoms, which acts as a high-boiling point solvent, causes a deterioration in the drying properties. It is thought that this type of deterioration in the drying properties is not seen with a low-speed printer such as a shuttle printer, but becomes readily apparent in high-speed printing such as one-pass printing. In contrast, in one embodiment of the present invention, by controlling the amount added of 1,2-butanediol and the amount added of 1,2-alkanediols of at least 5 carbon atoms, a combination of an improvement in the decap properties and an improvement in the image quality when performing one-pass printing with a fixed head printer can be achieved. For example, favorable results can be achieved in each of the evaluations even in cases such as Example 62 when two or more 1,2-alkanediols of at least 5 carbon atoms are added.

In contrast with the results of each of the Examples described above, as shown in Table 8, in Comparative Examples I to 5, which relate to embodiments that used a pigment dispersing resin that did not contain an alkyl group of 10 to 36 carbon atoms, the results for all of the evaluations were inferior to those of the Examples. Further, Comparative Examples 6 to 14 relate to embodiments which, although using a pigment dispersing resin containing an alkyl group of 10 to 36 carbon atoms, have a boiling point for the alkyl polyol that acts as the solvent and an amount added of that solvent that are outside the prescribed ranges of 180 to 250°C and 10 to 30% by weight respectively, and all of the evaluation results were inferior to those of the Examples.

**[Table 6]**

| | Color development | Ink viscosity stability | Ink dispersion stability | Dot formation | Drying properties evaluation I | Drying properties evaluation II | Decap properties |
|---|---|---|---|---|---|---|---|
| Example 1 | 2 | 5 | 5 | 2 | 4 | 2 | 2 |
| Example 2 | 3 | 4 | 4 | 3 | 3 | 2 | 3 |
| Example 3 | 3 | 3 | 3 | 3 | 3 | 2 | 4 |
| Example 4 | 3 | 3 | 3 | 3 | 2 | 2 | 4 |
| Example 5 | 3 | 3 | 3 | 3 | 2 | 2 | 4 |
| Example 6 | 3 | 5 | 4 | 3 | 2 | 2 | 4 |
| Example 7 | 3 | 4 | 4 | 3 | 2 | 2 | 4 |
| Example 8 | 3 | 3 | 3 | 3 | 2 | 2 | 4 |
| Example 9 | 3 | 5 | 4 | 3 | 2 | 2 | 4 |
| Example 10 | 3 | 4 | 4 | 3 | 2 | 2 | 4 |
| Example 11 | 3 | 5 | 5 | 3 | 2 | 2 | 4 |
| Example 12 | 3 | 5 | 5 | 3 | 2 | 2 | 4 |
| Example 13 | 3 | 2 | 2 | 3 | 2 | 2 | 3 |
| Example 14 | 3 | 5 | 4 | 3 | 2 | 2 | 2 |
| Example 15 | 3 | 2 | 2 | 3 | 2 | 2 | 3 |
| Example 16 | 3 | 5 | 4 | 3 | 2 | 2 | 2 |
| Example 17 | 3 | 2 | 2 | 3 | 2 | 2 | 3 |
| Example 18 | 3 | 3 | 3 | 3 | 2 | 2 | 4 |
| Example 19 | 3 | 5 | 5 | 3 | 2 | 2 | 4 |
| Example 20 | 3 | 5 | 5 | 3 | 2 | 2 | 3 |
| Example 21 | 3 | 4 | 4 | 3 | 2 | 2 | 2 |
| Example 22 | 3 | 5 | 5 | 3 | 3 | 4 | 4 |
| Example 23 | 3 | 5 | 5 | 3 | 3 | 3 | 5 |
| Example 24 | 4 | 5 | 5 | 4 | 3 | 3 | 5 |
| Example 25 | 3 | 5 | 5 | 3 | 3 | 2 | 5 |
| Example 26 | 4 | 5 | 5 | 4 | 3 | 3 | 5 |
| Example 27 | 4 | 5 | 5 | 2 | 2 | 2 | 5 |
| Example 28 | 4 | 5 | 5 | 2 | 2 | 2 | 5 |
| Example 29 | 4 | 5 | 5 | 4 | 3 | 3 | 5 |

**[Table 7]**

| | Color development | Ink viscosity stability | Ink dispersion stability | Dot formation | Drying properties evaluation I | Drying properties evaluation II | Decap properties |
|---|---|---|---|---|---|---|---|
| Example 30 | 3 | 5 | 5 | 3 | 4 | 3 | 2 |
| Example 31 | 3 | 5 | 5 | 3 | 3 | 2 | 3 |
| Example 32 | 4 | 5 | 5 | 4 | 4 | 3 | 3 |
| Example 33 | 3 | 5 | 5 | 4 | 4 | 2 | 3 |
| Example 34 | 4 | 5 | 5 | 4 | 3 | 2 | 5 |
| Example 35 | 3 | 5 | 5 | 3 | 4 | 2 | 5 |
| Example 36 | 4 | 4 | 4 | 4 | 4 | 2 | 5 |
| Example 37 | 3 | 4 | 4 | 3 | 3 | 3 ! | 4 |
| Example 38 | 4 | 3 | 3 | 4 | 4 | 2 | 5 |
| Example 39 | 4 | 3 | 3 | 4 | 2 | 3 | 4 |
| Example 40 | 2 | 5 | 5 | 2 | 5 | 3 | 3 |
| Example 41 | 3 | 5 | 5 | 3 | 5 | 3 | 4 |
| Example 42 | 3 | 5 | 5 | 4 | 5 | 4 | 4 |
| Example 43 | 4 | 5 | 5 | 4 | 5 | 4 | 4 |
| Example 44 | 4 | 5 | 5 | 5 | 5 | 4 | 4 |
| Example 45 | 3 | 5 | 5 | 4 | 5 | 4 | 4 |
| Example 46 | 5 | 4 | 4 | 5 | 5 | 4 | 4 |
| Example 47 | 5 | 5 | 5 | 5 | 5 | 3 | 4 |
| Example 48 | 5 | 5 | 5 | 5 | 2 | 5 | 2 |
| Example 49 | 5 | 5 | 5 | 5 | 2 | 5 | 3 |
| Example 50 | 5 | 5 | 5 | 5 | 2 | 3 | 4 |
| Example 51 | 5 | 5 | 5 | 5 | 3 | 4 | 3 |
| Example 52 | 5 | 5 | 5 | 5 | 4 | 4 | 3 |
| Example 53 | 5 | 5 | 5 | 5 | 5 | 3 | 4 |
| Example 54 | 5 | 5 | 5 | 5 | 3 | 5 | 3 |
| Example 55 | 5 | 5 | 5 | 5 | 4 | 4 | 3 |
| Example 56 | 5 | 5 | 5 | 5 | 5 | 4 | 4 |
| Example 57 | 5 | 5 | 5 | 5 | 4 | 4 | 3 |
| Example 58 | 5 | 5 | 5 | 5 | 3 | 5 | 4 |
| Example 59 | 5 | 5 | 5 | 5 | 3 | 5 | 4 |
| Example 60 | 5 | 5 | 5 | 5 | 3 | 4 | 4 |
| Example 61 | 5 | 5 | 5 | 5 | 4 | 3 | 5 |
| Example 62 | 5 | 5 | 5 | 5 | 4 | 4 | 4 |
| Example 63 | 5 | 5 | 5 | 5 | 4 | 4 | 4 |
| Example 64 | 5 | 5 | 5 | 5 | 4 | 4 | 4 |

**[Table 8]**

| | Color development | Ink viscosity stability | Ink dispersion stability | Dot formation | Dry ing properties evaluation I | Drying properties evaluation II | Decap properties |
|---|---|---|---|---|---|---|---|
| Comparative Example 1 | 1 | 1 | 1 | 1 | 2 | 2 | 1 |
| Comparative Example 2 | 2 | 1 | 1 | 1 | 1 | 1 | 2 |
| Comparative Example 3 | 1 | 1 | 1 | 1 | 1 | 1 | 1 |
| Comparative Example 4 | 1 | 1 | 1 | 1 | 2 | 2 | 2 |
| Comparative Example 5 | 2 | 1 | 1 | 2 | 1 | 1 | 1 |
| Comparative Example 6 | 1 | 2 | 2 | 1 | 1 | 1 | 4 |
| Comparative Example 7 | 1 | 2 | 2 | 1 | 1 | 1 | 5 |
| Comparative Example 8 | 2 | 1 | 1 | 2 | 1 | 2 | 4 |
| Comparative Example 9 | 1 | 2 | 2 | 1 | 1 | 1 | 5 |
| Comparative Example 10 | 1 | 1 | 1 | 1 | 1 | 1 | 4 |
| Comparative Example 11 | 2 | 1 | 1 | 2 | 1 | 1 | 2 |
| Comparative Example 12 | 2 | 1 | 1 | 1 | 1 | 1 | 5 |
| Comparative Example 13 | 2 | 1 | 1 | 2 | 1 | 1 | 5 |
| Comparative Example 14 | 2 | 1 | 1 | 2 | 1 | 1 | 5 |

## Claims

1. An aqueous ink composition comprising, at least, water, a pigment (but excluding titanium oxides in which a pigment surface has been treated with an organic compound), a pigment dispersing resin, two or more types of alkyl polyols having boiling points of at least 180°C but not more than 250°C at 1 atmosphere, and a binder resin, wherein
the pigment dispersing resin has an alkyl group of 10 to 36 carbon atoms, and
a total amount of the alkyl polyols, relative to a total weight of the aqueous ink composition, is at least 10% by weight but not more than 30% by weight,
the binder resin contains a water-soluble resin having an acid value of 10 to 80 mgKOH/g.

2. The aqueous ink composition according to Claim 1, wherein the pigment dispersing resin has an acid value of 50 to 400 mgKOH/g.

3. The aqueous ink composition according to Claim 1 or 2, wherein the alkyl polyols comprise an alkanediol.

4. The aqueous ink composition according to Claim 1 or 2, wherein the alkyl polyols are composed solely of alkanediols.

5. The aqueous ink composition according to Claim 3 or 4, wherein at least one alkanediol is a 1,2-alkanediol of at least 5 carbon atoms, and an amount of the 1,2-alkanediol of at least 5 carbon atoms, relative to a total weight of the aqueous ink composition, is greater than 10% by weight but not more than 30% by weight.

6. The aqueous ink composition according to Claim 3 or 4, wherein the alkanediol comprises at least one of 1,2-pentanediol and 1,2-hexanediol, and a total amount of 1,2-pentanediol and 1,2-hexanediol, relative to a total weight of the aqueous ink composition, is not more than 15% by weight.

7. The aqueous ink composition according to Claim 6, wherein the alkanediol further comprises 1,2-butanediol, and a total amount of the alkanediols, relative to a total weight of the aqueous ink composition, is at least 15% by weight but not more than 30% by weight.

8. The aqueous ink composition according to Claim 3 or 4, wherein the alkanediol comprises 1,2-butanediol but do not comprise 1,2-pentanediol or 1,2-hexanediol, and an amount of the 1,2-butanediol, relative to the total weight of the aqueous ink composition, is at least 10% by weight.

9. A aqueous ink composition comprising, at least, water, a pigment (but excluding titanium oxides in which a pigment surface has been treated with an organic compound), a pigment dispersing resin, two or more types of alkyl polyols having boiling points of at least 180°C but not more than 250°C at 1 atmosphere, and a binder resin, wherein
the alkyl polyols are selected from the group consisting of 1,2-propanediol, 1,2-butanediol, ethylene glycol, 2-methylpentan-2,4-diol, dibutylene glycol, 3-methyl-1,3-butanediol, 1,3-butanediol, 1,2-pentandiol, 1,3-propanediol, 2,2-dimethyl-1,3-propanediol, 2-methyl-1,3-propanediol, 1,2-hexanediol, 2-ethyl-2-methyl-1,3-propanediol, 1,2-heptanediol, 1,4-butanediol, 2-methyl-2-propyl-1,3-propanediol, dipropylene glycol, 1,5-pentanediol, 2-ethyl-1,3-hexanediol, 3-methyl-1,5-pentanediol and 1,6-hexanediol,
the pigment dispersing resin has an alkyl group of 10 to 36 carbon atoms,
a total amount of the alkyl polyols, relative to a total weight of the aqueous ink composition, is at least 10% by weight but not more than 30% by weight, and
the binder resin contains a water-soluble resin having an acid value of 10 to 80 mgKOH/g.

10. The aqueous ink composition according to any one of Claims 1 to 9, wherein the binder resin contains a water-soluble resin having an acid value of 20 to 50 mgKOH/g.

11. The aqueous ink composition according to any one of Claims 1 to 10, which is used for an inkjet application.

12. A printed item obtained by printing the aqueous ink composition according to any one of Claims 1 to 11 onto a substrate.

## Patentansprüche

1. Wässrige Tintenzusammensetzung, umfassend mindestens Wasser, ein Pigment (jedoch unter Ausschluss von Titanoxiden, bei denen eine Pigmentoberfläche mit einer organischen Verbindung behandelt wurde), ein Pigmentdispergierharz, zwei oder mehr Arten von Alkylpolyolen mit Siedepunkten von mindestens 180°C, jedoch nicht mehr als 250°C bei 1 Atmosphäre, und ein Bindemittelharz, wobei
das Pigmentdispergierharz eine Alkylgruppe mit 10 bis 36 Kohlenstoffatomen aufweist, und
die Gesamtmenge der Alkylpolyole, bezogen auf ein Gesamtgewicht der wässrigen Tintenzusammensetzung, mindestens 10 Gew.-%, aber nicht mehr als 30 Gew.-% beträgt,
das Bindemittelharz ein wasserlösliches Harz mit einer Säurezahl von 10 bis 80 mgKOH/g enthält.

2. Die wässrige Tintenzusammensetzung nach Anspruch 1, wobei das Pigmentdispergierharz eine Säurezahl von 50 bis 400 mgKOH/g aufweist.

3. Die wässrige Tintenzusammensetzung nach Anspruch 1 oder 2, wobei die Alkylpolyole ein Alkandiol umfassen.

4. Die wässrige Tintenzusammensetzung nach Anspruch 1 oder 2, wobei die Alkylpolyole ausschließlich aus Alkandiolen zusammengesetzt sind.

5. Die wässrige Tintenzusammensetzung nach Anspruch 3 oder 4, wobei mindestens ein Alkandiol ein 1,2-Alkandiol mit mindestens 5 Kohlenstoffatomen ist und die Menge des 1,2-Alkandiols mit mindestens 5 Kohlenstoffatomen, bezogen auf das Gesamtgewicht der wässrigen Tintenzusammensetzung, mehr als 10 Gew.-%, aber nicht mehr als 30 Gew.-% beträgt.

6. Die wässrige Tintenzusammensetzung nach Anspruch 3 oder 4, wobei das Alkandiol mindestens eines von 1,2-Pentandiol und 1,2-Hexandiol umfasst und die Gesamtmenge von 1,2-Pentandiol und 1,2-Hexandiol, bezogen auf ein Gesamtgewicht der wässrigen Tintenzusammensetzung, nicht mehr als 15 Gew.-% beträgt.

7. Die wässrige Tintenzusammensetzung nach Anspruch 6, wobei das Alkandiol ferner 1,2-Butandiol umfasst und die Gesamtmenge der Alkandiole, bezogen auf das Gesamtgewicht der wässrigen Tintenzusammensetzung, mindestens 15 Gew.-%, aber nicht mehr als 30 Gew.-% beträgt.

8. Die wässrige Tintenzusammensetzung nach Anspruch 3 oder 4, wobei das Alkandiol 1,2-Butandiol umfasst, aber nicht 1,2-Pentandiol oder 1,2-Hexandiol umfasst, und eine Menge des 1,2-Butandiols, bezogen auf das Gesamtgewicht der wässrigen Tintenzusammensetzung, mindestens 10 Gew.-% beträgt.

9. Wässrige Tintenzusammensetzung, umfassend mindestens Wasser, ein Pigment (jedoch unter Ausschluss von Titanoxiden, bei denen eine Pigmentoberfläche mit einer organischen Verbindung behandelt wurde), ein Pigmentdispergierharz, zwei oder mehr Arten von Alkylpolyolen mit Siedepunkten von mindestens 180°C, jedoch nicht mehr als 250°C bei 1 Atmosphäre, und ein Bindemittelharz, wobei
die Alkylpolyole ausgewählt sind aus der Gruppe, bestehend aus 1,2-Propandiol, 1,2-Butandiol, Ethylenglykol, 2-Methylpentan-2,4-diol, Dibutylenglykol, 3-Methyl-1,3-butandiol, 1,3-Butandiol, 1,2-Pentandiol, 1,3-Propandiol, 2,2-Dimethyl-1,3-propandiol, 2-Methyl-1,3-propandiol, 1,2-Hexandiol, 2-Ethyl-2-methyl-1,3-propandiol, 1,2-Heptandiol, 1,4-Butandiol, 2-Methyl-2-propyl-1,3-propandiol, Dipropylenglykol, 1,5-Pentandiol, 2-Ethyl-1,3-hexandiol, 3-Methyl-1,5-pentandiol und 1,6-Hexandiol,
das Pigmentdispergierharz eine Alkylgruppe mit 10 bis 36 Kohlenstoffatomen aufweist,
die Gesamtmenge der Alkylpolyole, bezogen auf das Gesamtgewicht der wässrigen Tintenzusammensetzung, mindestens 10 Gew.-%, aber nicht mehr als 30 Gew.-% beträgt, und das Bindemittelharz ein wasserlösliches Harz mit einer Säurezahl von 10 bis 80 mgKOH/g enthält.

10. Die wässrige Tintenzusammensetzung nach einem der Ansprüche 1 bis 9, wobei das Bindemittelharz ein wasserlösliches Harz mit einer Säurezahl von 20 bis 50 mgKOH/g enthält.

11. Die wässrige Tintenzusammensetzung nach einem der Ansprüche 1 bis 10, die für eine Tintenstrahlanwendung verwendet wird.

12. Druckerzeugnis, erhalten durch Bedrucken eines Substrats mit der wässrigen Tintenzusammensetzung nach einem der Ansprüche 1 bis 11.

## Revendications

1. Composition d'encre aqueuse comprenant, au moins, de l'eau, un pigment (à l'exclusion toutefois des oxydes de titane dans lesquels une surface du pigment a été traitée avec un composé organique), une résine de dispersion de pigment, deux types ou plus d'alkylpolyols ayant des points d'ébullition d'au moins 180 °C mais non supérieurs à 250 °C sous 1 atmosphère, et une résine liante, dans laquelle
la résine de dispersion de pigment comporte un groupe alkyle de 10 à 36 atomes de carbone, et
une quantité totale des alkylpolyols, par rapport à un poids total de la composition d'encre aqueuse, est d'au moins 10 % en poids mais non supérieure à 30 % en poids,
la résine liante contient une résine hydrosoluble ayant un indice d'acide de 10 à 80 mgKOH/g.

2. Composition d'encre aqueuse selon la revendication 1, dans laquelle la résine de dispersion de pigment a un indice d'acide de 50 à 400 mgKOH/g.

3. Composition d'encre aqueuse selon la revendication 1 ou 2, dans laquelle les alkylpolyols comprennent un alcanediol.

4. Composition d'encre aqueuse selon la revendication 1 ou 2, dans laquelle les alkylpolyols sont composés uniquement d'alcanediols.

5. Composition d'encre aqueuse selon la revendication 3 ou 4, dans laquelle au moins un alcanediol est un 1,2-alcanediol d'au moins 5 atomes de carbone, et une quantité du 1,2-alcanediol d'au moins 5 atomes de carbone, par rapport à un poids total de la composition d'encre aqueuse, est supérieure à 10 % en poids mais non supérieure à 30 % en poids.

6. Composition d'encre aqueuse selon la revendication 3 ou 4, dans laquelle l'alcanediol comprend au moins l'un parmi le 1,2-pentanediol et le 1,2-hexanediol, et une quantité totale de 1,2-pentanediol et de 1,2-hexanediol, par rapport à un poids total de la composition d'encre aqueuse, n'est pas supérieure à 15 % en poids.

7. Composition d'encre aqueuse selon la revendication 6, dans laquelle l'alcanediol comprend en outre du 1,2-butanediol, et une quantité totale des alcane-diols, par rapport à un poids total de la composition d'encre aqueuse, est d'au moins 15 % en poids mais non supérieure à 30 % en poids.

8. Composition d'encre aqueuse selon la revendication 3 ou 4, dans laquelle l'alcanediol comprend du 1,2-butanediol mais ne comprend pas de 1,2-pentanediol ou de 1,2-hexanediol, et une quantité du 1,2- butanediol, par rapport au poids total de la composition d'encre aqueuse, est d'au moins 10 % en poids.

9. Composition d'encre aqueuse comprenant, au moins, de l'eau, un pigment (à l'exclusion toutefois des oxydes de titane dans lesquels une surface du pigment a été traitée avec un composé organique), une résine de dispersion de pigment, deux types ou plus d'alkylpolyols ayant des points d'ébullition d'au moins 180 °C mais non supérieurs à 250 °C sous 1 atmosphère, et une résine liante, dans laquelle
les alkylpolyols sont choisis dans le groupe constitué du 1,2-propanediol, 1,2-butanediol, éthylène glycol, 2-méthylpentan-2,4-diol, dibutylène glycol, 3-méthyl-1,3-butanediol, 1,3- butanediol, 1,2-pentanediol, 1,3-propanediol, 2,2-diméthyl-1,3-propanediol, 2-méthyl-1,3-propanediol, 1,2-hexanediol, 2-éthyl-2-méthyl-1,3-propanediol, 1,2-heptanediol, 1,4-butanediol, 2-méthyl-2-propyl-1,3-propanediol, dipropylène glycol, 1,5-pentanediol, 2-éthyl-1,3-hexanediol, 3-méthyl-1,5-pentanediol et 1,6-hexanediol,
la résine de dispersion de pigment comporte un groupe alkyle de 10 à 36 atomes de carbone,
une quantité totale des alkylpolyols, par rapport à un poids total de la composition d'encre aqueuse, est d'au moins 10 % en poids mais non supérieure à 30 % en poids, et
la résine liante contient une résine hydrosoluble ayant un indice d'acide de 10 à 80 mgKOH/g.

10. Composition d'encre aqueuse selon l'une quelconque des revendications 1 à 9, dans laquelle la résine liante contient une résine hydrosoluble ayant un indice d'acide de 20 à 50 mgKOH/g.

11. Composition d'encre aqueuse selon l'une quelconque des revendications 1 à 10, qui est utilisée pour une application de jet d'encre.

12. Article imprimé obtenu par impression de la composition d'encre aqueuse selon l'une quelconque des revendications 1 à 11 sur un substrat.
